# EUROPÄISCHE PATENTSCHRIFT

(11) **EP 3 880 441 B1**
(45) Veröffentlichungstag und Bekanntmachung des Hinweises auf die Patenterteilung: **12.08.2026**
(21) Anmeldenummer: 19797309.2
(22) Anmeldetag: 07.11.2019
(51) Int. Cl.: B29C 64/35, B29C 71/00, B29C 71/02, B29C 71/04

(54) **VERFAHREN ZUR HERSTELLUNG EINES ADDITIV GEFERTIGTEN UND BEHANDELTEN GEGENSTANDS**
METHOD FOR PRODUCING AN OBJECT MANUFACTURED AND TREATED USING ADDITIVE PROCESSES
PROCÉDÉ DE FABRICATION D'UN OBJET FABRIQUÉ ET TRAITÉ DE MANIÈRE ADDITIVE

(30) Priorität: 13.11.2018 EP 18205986
(43) Veröffentlichungstag der Anmeldung: 22.09.2021
(73) Patentinhaber: Stratasys, Inc., Eden Prairie, MN 55344 (US)
(72) Erfinder: ACHTEN, Dirk, 51375 Leverkusen (DE); STERN, Frank-Stefan, 51427 Bergisch Gladbach (DE); TOMCZYK, Christoph, 51379 Leverkusen (DE); WAGNER, Roland, 51375 Leverkusen (DE); METTMANN, Bettina, 50259 Pulheim (DE); BÜSGEN, Thomas, 51377 Leverkusen (DE); DEGIORGIO, Nicolas, 47807 Krefeld (DE); KÜNZEL, Jonas, 51381 Leverkusen (DE); WOLF, Maximilian, 50823 Köln (DE)
(74) Vertreter: Davepon, Björn
(86) Internationale Anmeldenummer: PCT/EP2019/080582
(87) Internationale Veröffentlichungsnummer: WO 2020/099241

(56) Entgegenhaltungen:
- EP-A1- 3 305 510
- DE-A1- 102009 047 237
- FR-A1- 3 032 904
- US-A1- 2010 288 194
- US-A1- 2016 074 911
- US-A1- 2018 229 405

## Beschreibung

Die vorliegende Erfindung betrifft ein Verfahren zum Erzeugen eines Gegenstands mittels additiver Fertigung. Die vorliegende Erfindung betrifft ferner einen Gegenstand, der durch ein derartiges Verfahren erzeugt ist.

Als additive Fertigungsverfahren werden solche Verfahren bezeichnet, mit denen Gegenstände schichtweise aufgebaut werden. Sie unterscheiden sich daher deutlich von anderen Verfahren zur Herstellung von Gegenständen wie Fräsen oder Bohren. Bei letztgenannten Verfahren wird ein Gegenstand so bearbeitet, dass er durch Wegnahme von Material seine Endgeometrie erhält. Somit ist ein additives Verfahren ein aufbauendes Verfahren wohingegen konventionelle Verfahren als abtragende Verfahren bezeichnet werden können.

Auf Basis der Materialien, wie etwa der Polymere, die heute in pulverbasierten additiven Fertigungsverfahren vorwiegend eingesetzt werden, entstehen Gegenstände, deren mechanische Eigenschaften sich grundlegend von der Charakteristik der Materialien unterscheiden können, wie sie in anderen kunststoffverarbeitenden Verfahren, wie dem Spritzgießen, bekannt sind. Bei der Verarbeitung durch die additiven Fertigungsverfahren verlieren die eingesetzten thermoplastischen Materialien ihre spezifische Charakteristik.

Polyamid 12 (PA12) ist der derzeit am meisten eingesetzte Werkstoff für pulverbasierte additive Fertigungsverfahren, wie z.B. dem Lasersintern. PA12 zeichnet sich durch hohe Festigkeit und Zähigkeit aus, wenn es im Spritzguss oder durch Extrusion verarbeitet wird. Ein handelsübliches PA12 zeigt beispielsweise nach dem Spritzgießen eine Bruchdehnung von mehr als 200%. PA12-Gegenstände, die mit dem Lasersinterverfahren hergestellt sind, zeigen hingegen Bruchdehnungen um 15%. Das Bauteil ist spröde und kann daher nicht mehr als typisches PA12-Bauteil angesehen werden. Gleiches gilt für Polypropylen (PP), welches als Pulver für das Lasersintern angeboten wird. Auch dieses Material versprödet und verliert damit die PP-typischen zäh-elastischen Eigenschaften, Gründe hierfür sind in der Morphologie der Polymere zu finden.

Während des Aufschmelzvorgangs mittels Laser oder IR und insbesondere beim Abkühlen entsteht eine unregelmäßige innere Struktur der so genannten teilkristallinen Polymere (beispielsweise PA12 und PP). Die innere Struktur (Morphologie) teilkristalliner Polymere ist teilweise durch hohe Ordnung gekennzeichnet. Ein gewisser Anteil der Polymerketten bildet beim Abkühlen kristalline, eng gepackte Strukturen aus. Während des Aufschmelzens und Abkühlens wachsen diese Kristallite unregelmäßig an den Grenzen der nicht komplett aufgeschmolzenen Partikel sowie an den ehemaligen Korngrenzen der Pulverpartikel und an im Pulver enthaltenen Additiven. Die Unregelmäßigkeit der so entstehenden Morphologie begünstigt unter mechanischer Belastung das Entstehen von Rissen. Die beim pulverbasierten additiven Verfahren nicht zu vermeidende Restporosität fördert das Risswachstum.

Spröde Eigenschaften der so entstandenen Bauteile sind das Resultat. Zur Erläuterung dieser Effekte wird auf European Polymer Journal 48 (2012), Seiten 1611-1621 verwiesen. Auch die im Lasersintern eingesetzten elastischen Polymere auf Basis von Block-Copolymeren zeigen ein für die eingesetzten Polymere untypisches Eigenschaftsprofil, wenn sie als Pulver mit additiven Fertigungsverfahren zu Gegenständen verarbeitet werden. Beim Lasersintern kommen heute thermoplastische Elastomere (TPE) zum Einsatz. Gegenstände, die aus den heute verfügbaren TPEs hergestellt werden, weisen nach dem Erstarren eine hohe Restporosität auf und die ursprüngliche Festigkeit des TPE-Werkstoffs ist nicht im daraus gefertigten Gegenstand messbar. In der Praxis werden diese porösen Bauteile daher nachträglich mit flüssigen, aushärtenden Polymeren infiltriert, um das erforderliche Eigenschaftsprofil einzustellen. Die Festigkeit und Dehnung bleibt trotz der genannten zusätzlichen Maßnahme auf einem niedrigen Niveau. Der zusätzliche Verfahrensaufwand führt - neben den immer noch unzureichenden mechanischen Eigenschaften - zu einer schlechten Wirtschaftlichkeit dieser Materialien.

Bei Lasersinter-Verfahren unter Einsatz von Polymerpartikeln werden diese in der Regel in einem abgeschlossenen Volumen oder Kammer verarbeitet, damit die Partikel in einer erwärmten Atmosphäre verarbeitet werden können. Auf diese Weise kann die Temperaturdifferenz, die zum Sintern der Partikel durch Einwirkung des Lasers überwunden werden muss, verringert werden. Generell lässt sich feststellen, dass die thermischen Eigenschaften des Polymers die möglichen Verarbeitungstemperaturen in Lasersinter-Verfahren beeinflussen. Daher wurden im Stand der Technik vielfältige Lösungen für solche Polymere und deren Verarbeitungsverfahren vorgeschlagen.

US 2005/0080191 A1 betrifft ein Pulversystem zur Verwendung in festen Freiform-Herstellungsverfahren, umfassend wenigstens ein Polymer mit reaktiven Eigenschaften und verschmelzbaren Eigenschaften, wobei das wenigstens eine Polymer ausgewählt ist, um mit einem flüssigen Bindemittel zu reagieren und bei einer Temperatur oberhalb des Schmelzpunkts oder der Glasübergangstemperatur des wenigstens einen Polymers verschmelzbar ist. Das wenigstens eine Polymer kann wenigstens ein reaktives Polymer und wenigstens ein verschmelzbares Polymer umfassen und das wenigstens eine schmelzbare Polymer kann einen Schmelzpunkt oder eine Glasübergangstemperatur im Bereich von ca. 50 °C bis ca. 250 °C aufweisen.

US 2018/229405 A1 offenbart, dass ein Verfahren zur Fertigung eines 3D-Objekts das Entfernen von Stützmaterial von dem Objekt erleichtert. Das Verfahren umfasst das Bewegen des Objekts zu einer Position gegenüber einem Mikrowellenstrahler und Betätigen des Mikrowellenstrahlers, um die Phase des Stützmaterials von fest nach flüssig zu wechseln. Ein Controller überwacht entweder den Ablauf einer voreingestellten Zeitspanne oder die Temperatur des Objekts, um zu bestimmen, wann die Betätigung des Mikrowellenstrahlers zu beenden ist. Die Mikrowellenbestrahlung beschädigt das Objekt nicht, weil das Stützmaterial einen dielektrischen Verlustfaktor besitzt, der größer als der dielektrische Verlustfaktor des Objekts ist.

US 2016/074911 A1 beschreibt eine Waschvorrichtung für 3D-gedruckte Artikel zum Entfernen von Trägermaterial von dem Artikel, umfassend eine Wascheinheit und eine Einweicheinheit, wobei die Einweicheinheit eine Kammer zum Halten eines einzuweichenden Artikels, eine Pumpe zum Zirkulieren einer Einweichflüssigkeit durch die Kammer und eine Heizung umfasst mit einer thermostatischen Steuerung zum Erhitzen der Einweichflüssigkeit auf eine vorbestimmte Temperatur zur Zirkulation durch die Kammer; und wobei die Wascheinheit ein Gehäuse umfasst, das eine Waschkammer mit mindestens einer Flüssigkeitsausstoßdüse zum Besprühen eines darin befindlichen Artikels mit einer Waschflüssigkeit definiert.

Im Stand der Technik existiert weiterhin der Bedarf an additiven Herstellungsverfahren, in denen die erhaltenen Bauteile homogene Materialeigenschaften aufweisen.

Es ist daher die Aufgabe der vorliegenden Erfindung, die aus dem Stand der Technik bekannten Nachteile zumindest zum Teil zu überwinden. Insbesondere ist es die Aufgabe der vorliegenden Erfindung, eine Möglichkeit zu schaffen, durch welche insbesondere eine hohe Stabilität der gefertigten Bauteile, insbesondere auch parallel zu einer Schichtrichtung, und/oder homogene Bauteileigenschaften ermöglicht werden können.

Die Lösung der Aufgabe erfolgt erfindungsgemäß durch ein Verfahren mit den Merkmalen des Anspruchs 1. Bevorzugte Ausgestaltungen der Erfindung sind in den Unteransprüchen, in der Beschreibung oder den Figuren beschrieben, wobei weitere in den Unteransprüchen oder in der Beschreibung oder den Figuren beschriebene oder gezeigte Merkmale einzeln oder in einer beliebigen Kombination einen Gegenstand der Erfindung darstellen können, wenn sich aus dem Kontext nicht eindeutig das Gegenteil ergibt.

Gegenstand der vorliegenden Erfindung ist ein Verfahren zur Herstellung eines behandelten Gegenstands umfassend die Schritte:
a) Erzeugen des Gegenstands mittels additiver Fertigung, wobei
der Gegenstand durch ein mehrmaliges schichtweises und entsprechend einem Querschnitt des Gegenstandes räumlich selektives Anordnen wenigstens eines ersten Materials auf einem Substrat erzeugt wird. Dabei ist es vorgesehen, dass das Verfahren den weiteren Verfahrensschritt aufweist:
b) wenigstens teilweises Kontaktieren des noch auf dem Substrat befindlichen oder schon vom Substrat abgelösten durch additive Fertigung erzeugten Gegenstands mit einem auf ≥ T erwärmten Pulverbett aus einem zweiten Material für eine Zeit ≥ 1 min., bevorzugt für eine Zeit von ≥ 1min bis ≤ 2h, um den behandelten Gegenstand zu erhalten,
wobei
- T für eine Temperatur von ≥ 25 °C, bevorzugt von ≥ 50 °C, mehr bevorzugt von ≥ 75 °C, besonders bevorzugt von ≥ 150 °C steht.

Das Kontaktieren des erhaltenen Gegenstands mit dem Pulverbett gemäß Verfahrensschritt b) wird für einen Zeitraum durchgeführt, der in einem Bereich von ≥ 1 Minuten bis ≤ 174 Stunden liegt. Bevorzugt kann es vorgesehen sein, dass das Kontaktieren des erhaltenen Gegenstands mit dem Pulverbett gemäß Verfahrensschritt b) für einen Zeitraum durchgeführt wird, der in einem Bereich liegt von ≥ 10 Minuten bis ≤ 48 Stunden liegt, weiter bevorzugt in einem Bereich liegt von ≥ 15 Minuten bis ≤ 24 Stunden liegt, weiter bevorzugt in einem Bereich liegt von ≥ 20 Minuten bis ≤ 8 Stunden liegt.

Offenbart ist ferner ein Verfahren zur Herstellung eines behandelten Gegenstands umfassend die Schritte:
a) Erzeugen des Gegenstands mittels additiver Fertigung, wobei
der Gegenstand durch ein mehrmaliges schichtweises und entsprechend einem Querschnitt des Gegenstandes räumlich selektives Anordnen wenigstens eines ersten Materials auf einem Substrat erzeugt wird. Dabei ist es vorgesehen, dass das Verfahren den weiteren Verfahrensschritt aufweist:
b) wenigstens teilweises Kontaktieren des noch auf dem Substrat befindlichen oder schon vom Substrat abgelösten durch additive Fertigung erzeugten Gegenstands mit einer auf ≥ T erwärmten Flüssigkeit aus einem zweiten Material für eine Zeit ≥ 1 min., bevorzugt für eine Zeit von ≥ 1min bis ≤ 2h, um den behandelten Gegenstand zu erhalten,
wobei
- T für eine Temperatur von ≥ 25 °C, bevorzugt von ≥ 50 °C, mehr bevorzugt von ≥ 75 °C, besonders bevorzugt von ≥ 150 °C steht.

Das Kontaktieren des erhaltenen Gegenstands mit der Flüssigkeit gemäß Verfahrensschritt b) wird für einen Zeitraum durchgeführt, der in einem Bereich von ≥ 1 Minuten bis ≤ 174 Stunden liegt.

Beispielsweise bei den vorstehend beschriebenen Zeitdauern, insbesondere bei einer Behandlungsdauer von ≥ 1 Minute bis ≤ 72 Stunden, der Behandlung des Gegenstands bei Verfahrensschritt b) kann es ferner vorgesehen sein, dass sich die Temperatur T des Pulverbetts oder der Flüssigkeit bevorzugt im Laufe des Verfahrensschritts b) verändert und die Temperaturkurve gegebenenfalls Temperaturen von -190°C bis +2000°C umfassen kann. Dies kann eine besonders adaptive Behandlung ermöglichen, wobei auf während der Behandlung sich verändernde Eigenschaften des Gegenstands reagiert werden kann beziehungsweise diese in Betracht gezogen werden können.

Ein derartiges Verfahren erlaubt auf besonders vorteilhafte Weise das Erzeugen eines Gegenstands mittels additiver Fertigung,
wobei

der erzeugte Gegenstand eine hohe Stabilität aufweist und dabei homogene Eigenschaften aufweist. Die vorliegende Erfindung betrifft somit ein Verfahren zum Erzeugen eines Gegenstands mittels additiver Fertigung. Dabei ist der herzustellende Gegenstand nicht grundsätzlich begrenzt. Insbesondere die additive Fertigung erlaubt es in effektiver Weise, verschiedenste Gegenstände für verschiedenste Anwendungen erzeugen zu können und dabei unbegrenzte Geometrien zu erlauben. Entsprechend unterliegt auch der herzustellende Gegenstand keiner Begrenzung sondern das hier beschriebene Verfahren kann grundsätzlich dazu dienen, jeglichen durch ein additives Verfahren erzeugbaren Gegenstand zu formen. Besonders bevorzugt ist das hier beschriebene Verfahren jedoch für solche Gegenstände, die eine hohe Stabilität beziehungsweise homogene mechanische Eigenschaften benötigen.

Bezüglich des additiven Verfahrens ist dieses ferner ebenfalls nicht beschränkt. Grundsätzlich kann dieses Verfahren für jegliches additive Verfahren möglich sein.

Als additive Fertigungsverfahren werden solche Verfahren bezeichnet, mit denen Gegenstände schichtweise aufgebaut werden. Sie unterscheiden sich daher deutlich von anderen Verfahren zur Herstellung von Gegenständen wie Fräsen oder Bohren. Bei letztgenannten Verfahren wird ein Gegenstand so bearbeitet, dass er durch Wegnahme von Material seine Endgeometrie erhält.

Additive Fertigungsverfahren nutzen unterschiedliche Materialien und Prozesstechniken, um Gegenstände schichtweise aufzubauen. Beim sogenannten Fused Deposition Modeling (FDM) beispielsweise wird ein thermoplastischer Kunststoffdraht verflüssigt und mit Hilfe einer Düse schichtweise auf einer beweglichen Bauplattform abgelegt. Beim Erstarren entsteht ein fester Gegenstand. Die Steuerung der Düse und der Bauplattform erfolgt auf der Grundlage einer CAD-Zeichnung des Gegenstands. Ist die Geometrie dieses Gegenstands komplex, zum Beispiel mit geometrischen Hinterschneidungen, müssen zusätzlich Stützmaterialien mitgedruckt und nach Fertigstellung des Gegenstands wieder entfernt werden.

Daneben existieren additive Fertigungsverfahren, welche thermoplastische Pulver nutzen, um Gegenstände schichtweise aufzubauen. Hierbei werden über einen so genannten Beschichter dünne Pulverschichten aufgetragen und anschließend mittels einer Energiequelle selektiv aufgeschmolzen. Das umgebende Pulver stützt dabei die Bauteilgeometrie. Komplexe Geometrien sind dadurch wirtschaftlicher zu fertigen als beim zuvor beschrieben FDM-Verfahren. Zudem können verschiedene Gegenstände eng gepackt im so genannten Pulverbett angeordnet beziehungsweise gefertigt werden. Aufgrund dieser Vorteile gelten pulverbasierte additive Fertigungsverfahren zu den wirtschaftlichsten additiven Herstellungsverfahren am Markt. Sie werden daher überwiegend von industriellen Nutzern verwendet. Beispiele für pulverbasierte additive Fertigungsverfahren sind das sogenannte Lasersintern (SLS, Selective Laser Sintering) oder das High Speed Sintering (HSS). Sie unterscheiden sich untereinander in der Methode, um die Energie für das selektive Aufschmelzen in den Kunststoff einzutragen. Beim Lasersinterverfahren erfolgt der Energieeintrag über einen gelenkten Laserstrahl. Beim so genannten High Speed Sintering (HSS)-Verfahren, wie etwa in EP 1648686 beschrieben. erfolgt der Energieeintrag über Infrarot (IR)-Strahler in Kombination mit einem selektiv in das Pulverbett gedruckten IR-Absorber. Das so genannte Selective Heat Sintering (SHS) nutzt die Druckeinheit eines konventionellen Thermodruckers, um thermoplastische Pulver selektiv aufzuschmelzen.

Direkt-Pulververfahren-Pulverbett-Systeme sind als Laserschmelzverfahren bekannt und sind im Handel unter verschiedenen Handelsnamen wie Selektives Laserschmelzen (SLM), Laser-Cusing und Direkt-Metall-Laser-Sintern (DMLS) erhältlich. Die einzige Ausnahme von diesem Verfahrensprinzip ist der Elektronenstrahlschmelzprozess (EBM), bei dem ein Elektronenstrahl unter Vollvakuum verwendet wird. Schweißvorrichtungen für metallische Pulverbetten sind heute bei Concept Laser GmbH, EOS GmbH, ReaLizer GmbH, Renishaw und SLM Solutions GmbH in Europa erhältlich. Diese Unternehmen bieten eine Vielzahl von Systemen an, die auf dem ähnlichen Prinzip des selektiven Laserschmelzens basieren, aber ihren eigenen Prozessen unterschiedliche Namen geben. 3D-Systems, mit Sitz in USA, bietet auch Systeme an, die auf dem selektiven Laserschmelzen basieren. Die Wahl der richtigen Maschine hängt von den Anforderungen des Endanwenders ab, wobei der Typ der Lasereinheit, die Handhabung des Pulvers und die Aufbaukammer einige der Hauptmerkmale des zu berücksichtigenden Systems sind.

Arcam AB, mit Sitz in Schweden, stellt Pulverbett-Schweißsysteme her, die einen Elektronenstrahl als Energiequelle für den Schmelzprozess verwenden. Ein Hybridsystem, das Pulverbettschweißen mit CNC-Fräsen kombiniert, wird von der japanischen Firma Matsuura angeboten.

Ein anderes System, das ein Pulverbett verwendet, ist das Höganäs-Digital-Metal-Verfahren. Dieses System wurde von fcubic entwickelt und verwendet einen Präzisions-Inkjet, um eine spezielle "Tinte" auf einer 45 Mikrometer-dicken Schicht aus Metallpulver abzuscheiden. Eine weitere Pulverschicht von 45 Mikrometern wird aufgetragen und der Druckschritt wird wiederholt, bis die Komponente vollständig ist. Das Teil wird dann entbunden und gesintert, um die endgültige Größe und Festigkeit zu erreichen. Einer der Vorteile dieses Systems besteht darin, dass der Aufbau bei Raumtemperatur (RT, entspricht 20 °C) ohne das teilweise Schmelzen erfolgt, das mit der Laser- oder Elektronenstrahltechnologie auftritt. Grundsätzlich sind während des Baus auch keine Stützstrukturen erforderlich, da diese durch das Pulverbett unterstützt werden.

Obwohl Systeme mit Pulverzufuhr das gleiche Ausgangsmaterial verwenden, unterscheidet sich die Art und Weise, in der das Material Schicht für Schicht hinzugefügt wird, beträchtlich. Das Pulver fließt durch eine Düse, wobei es durch einen Strahl direkt auf der Oberfläche des behandelten Teils geschmolzen wird.

Systeme mit Pulverzuführung werden als Laser-Plattierung (Laser Cladding), gerichtete Energieabscheidung (Directed Energy Deposition) und Laser-Metallabscheidung (Laser Metal Deposition) bezeichnet. Das Verfahren ist hochpräzise und basiert auf einer automatisierten Abscheidung einer Materialschicht mit einer Dicke zwischen 0,1 mm und mehreren Zentimetern. Die metallurgische Verbindung des Ummantelungsmaterials mit dem Grundmaterial und die Abwesenheit von Untergrabungen sind einige Merkmale dieses Verfahrens. Der Prozess unterscheidet sich von anderen Schweißtechniken dadurch, dass ein geringer Wärmeeintrag das Substrat durchdringt.

Eine Entwicklung dieser Technologie ist das Laser Engineered Net Shaping (LENS) Pulverzufuhrsystem, das von Optomec verwendet wird. Diese Methode erlaubt das Hinzufügen von Material zu einem bereits vorhandenen Teil, was bedeutet, dass es verwendet werden kann, um teure Metallkomponenten zu reparieren, die beschädigt worden sein können, wie zerkleinerte Turbinenschaufeln und Spritzgusswerkzeugeinsätze und bietet eine hohe Flexibilität bei der Klemmung der Teile und die "Beschichtungs" -Materialien.

Unternehmen, die Systeme nach dem gleichen Prinzip anbieten, sind: BeAM aus Frankreich, Trumpf aus Deutschland und Sciaky aus den USA. Ein interessanter Ansatz eines Hybridsystems ist der von DMG Mori angebotene Ansatz. Die Kombination des Laser-Cladding-Prinzips mit einem 5-Achsen-Frässystem eröffnet neue Anwendungsfelder in vielen Industriezweigen.

Der Prozess ADAM (Atomic Diffusion Additive Manufacturing) von Markforged beginnt mit der Wahl verschiedener Metallpulver. Als nächstes wird das Pulver in Kunststoff-Bindemittel Schicht für Schicht in Form gebracht. Nach dem Drucken wird das Teil in einem Ofen gesintert, der das Bindemittel abbrennt und das Pulver in ein endgültiges, volldichtes Metallteil verfestigt.

Zusammenfassend umfassen beispielhafte additive Verfahren, die im Rahmen dieses Verfahrens anwendbar sind, die vorstehend Beschriebenen und umfassen etwa die folgend aufgezählten additiven Verfahren. Geeignet sind somit beispielsweise High Speed Sintern, selektives Laserschmelzen, selektives Lasersintern, Selective Heat Sintering, Binder Jetting, Elektronenstrahlschmelzen, Fused Deposition Modeling, Fused Filament Fabrication, Auftragschweißen, Rührreibschweißen, Wax Deposition Modeling, Contour Crafting, MetallPulver-Auftragsverfahren, Kaltgasspritzen, Elektronenstrahlschmelzen, Stereolithographie, 3D-Siebdruckverfahren, lichtgesteuerte elektrophoretische Abscheidung, Druck von mit Metallpulver hochgefüllten Thermoplasten nach dem FDM Verfahren, Nano Metallpulver im Inkjetverfahren, DLP (Direct Light Processing), Inkjetting, Continuous Light Interface Processing (CLIP).

Das hier beschriebene Verfahren umfasst zunächst gemäß Verfahrensschritt a) das Erzeugen eines Gegenstands mittels additiver Fertigung, wobei der Gegenstand durch ein mehrmaliges schichtweises und entsprechend einem Querschnitt des Gegenstandes räumlich selektives Anordnen, insbesondere Aufbringen und/oder Aufschmelzen und/oder Polymerisieren und/oder Verkleben, wenigstens eines ersten Materials auf einem Substrat erzeugt wird. Dieser Schritt ist somit ein für additive Verfahren üblicher Vorgang.

Als Substrat kann dabei dem Grunde nach jegliche Auflage dienen, auf welcher der Gegenstand aufgebaut werden kann. Beispielsweise aber nicht beschränkt hierauf kann das Substrat ein festes Substrat sein. Dabei wird das Material, aus welchem der Gegenstand ausgebildet werden soll, entsprechend des Querschnitts des zu erzeugenden Gegenstands in mehreren aufeinanderfolgenden Schichten aufgebaut. Der Querschnitt des Gegenstands ist dabei somit der Querschnitt jeder Schicht, so dass insgesamt der Gegenstand entsprechend des Querschnittprofils und damit entsprechend seiner Geometrie aufgebaut wird.

Bei additiven Fertigungsverfahren beziehungsweise bei 3D Druck-Verfahren, die nach dem Flächenverfahren arbeiten, wird ebenso wie im Stereolithografie-Verfahren eine PhotopolymerLösung belichtet. Dabei erfolgt die Belichtung aber nicht punktuell über einen Laserstrahl, sondern flächig. Dazu wird eine Belichtungsmatrix auf die jeweilige Schicht projiziert um das Material an diesen Stellen auszuhärten.

Bei dem DLP-Verfahren (Digital Light Processing) wird ein Punktraster auf die Photopolymerfläche von ober projiziert und die Bauplattform sinkt Schicht für Schicht in die Lösung ein. Vorteil dieses Verfahrens ist, dass durch unterschiedlich starke Belichtung auch die Aushärtung variiert werden kann. Dadurch können zum Beispiel Stützkonstruktionen leichter entfernt werden, wenn diese weniger ausgehärtet sind.

Bei dem als LCM (Lithography-based Ceramic Manufacturing) bezeichneten 3D Druck wird das Photopolymerbad nicht von oben, sondern von unten belichtet. Speziell wird dieses Verfahren angewandt, um ein Gemisch aus festen Bestandteilen (Keramik) und einer Photopolymerlösung zu belichten. Der so entstehende Grünling wird nach dem 3D Druck gesintert und der Binder ausgebrannt. Vorteil dieses 3D Druckverfahrens ist die Möglichkeit, unterschiedliche Granulate einzusetzen.

Mit der CLIP (Continuous Liquid Interface Production) Technologie können Objekte ohne sichtbare Schichten hergestellt werden. Die Photopolymerisation des flüssigen Harzes wird mittels Abstimmung von UV-Licht (Aushärtung) und Sauerstoff (verhindert Aushärtung) gesteuert. Der Boden des Harztanks besteht aus einem licht- und luftdurchlässigen Material, ähnlich dem von Kontaktlinsen. Dadurch kann in der untersten Schicht eine sogenannte "dead zone" mittels Sauerstoff erzeugt werden, die den weiteren Aufbau des Objekts ermöglicht, das kontinuierlich aus dem Becken nach oben gezogen wird.

Bei der Stereolithographie (SLA-Verfahren) wird ein lichtaushärtender Kunststoff, der auch als Photopolymer bezeichnet wird, von einem Laser in dünnen Schichten ausgehärtet. Das Verfahren geschieht in einem Schmelzbad, das mit den Basismonomeren des lichtempfindlichen (photosensitiven) Kunststoffes gefüllt ist. Nach jedem Schritt wird das Werkstück einige Millimeter in das Bad abgesenkt und auf eine Position zurückgefahren, die um den Betrag einer Schichtstärke unter der vorherigen liegt.

Insbesondere, wenn das erste Material ein Metall ist, kann als additives Verfahren ein derartiges Verfahren verwendet werden, das mittels der Inkjet-Technologie arbeitet. Beispielhaft kann hier das Binder Jetting genannt werden.

Weiterhin kann als erstes Material grundsätzlich jegliches Material verwendet werden, das mittels eines additiven Verfahrens verarbeitet werden kann. Somit kann als Material beispielsweise jegliches Material verwendet werden, das sich unter geeigneten Bedingungen aufschmelzen lässt und das wieder erstarrt. Ferner kann nur ein erstes Material verwendet werden oder es kann eine Materialmischung verwendet werden oder es können mehrere erste Materialien verwendet werden. Werden mehrere erste Materialien verwendet, können diese in unterschiedlichen Schichten oder auch in denselben Schichten angeordnet werden.

Grundsätzlich kann das erste Material in Pulverform auf dem Substrat vorliegen oder auch in bereits geschmolzener Form auf das Substrat aufgebracht werden.

In einer vorteilhaften Ausführungsform des erfindungsgemäßen Verfahrens ist es vorgesehen, dass wenigstens ein Teil des ersten Materials ein schmelzbares Polymer aufweist. Vorzugsweise weist das gesamte erste Material beziehungsweise weisen alle als erstes Material eingesetzten Partikel im Verfahren ein schmelzbares Polymer auf. Es ist ferner bevorzugt, dass mindestens 90 Gew.-% der Partikel einen Teilchendurchmesser von ≤ 0.25 mm, bevorzugt ≤ 0.2 mm, besonders bevorzugt ≤ 0.15 mm aufweisen. Die Partikel mit dem schmelzbaren Polymer können beispielsweise homogen aufgebaut sein, so dass keine weiteren schmelzbaren Polymere in den Partikeln vorliegen.

Geeignete Pulver thermoplastischer Materialien können über verschiedene gängige Prozesse hergestellt werden wie zum Beispiel Mahlprozesse, Kryo-Mahlen, Fällungsprozesse, Sprühtrocknungsprozesse und andere.

Neben dem schmelzbaren Polymer können die Partikel noch weitere Additive wie Füllstoffe, Stabilisatoren und dergleichen, aber auch weitere Polymere, enthalten. Der Gesamtgehalt an Additiven in den Partikeln kann beispielsweise ≥ 0,1 Gew.-% bis ≤ 60 Gew.-%, bevorzugt ≥ 1 Gew.-% bis ≤ 40 Gew.-%, betragen.

In einer weiteren bevorzugten Ausführungsform ist das schmelzbare Polymer ausgewählt aus: Polyetheretherketon (PEEK), Polyaryletherketon (PAEK), Polyetherketoneketon (PEKK), Polyethersulfone, Polyimid, Polyetherimid, Polyester, Polyamide, Polycarbonate, Polyurethane, Polyvinylchlorid, Polyoxymethylen, Polyvinylacetat, Polyacrylate, Polymethacrylate, TPE (Thermoplastische Elastomere), Thermoplaste wie Polyethylen, Polypropylen, Polylactid, ABS (Acrylnitril-Butadien-Styrol-Copolymere), PETG (ein mit Glycol modifiziertes Polyethylenterephtalat), oder auch Polystyrol, Polyethylen, Polypropylen und Abmischungen und / oder Legierungen der genannten Polymere.

Vorzugsweise ist das schmelzbare Polymer ein Polyurethan, das zumindest anteilsmäßig erhältlich ist aus der Reaktion von aromatischen und/oder aliphatischen Polyisocyanaten mit geeigneten (Poly)alkoholen und/oder (Poly)aminen oder deren Abmischungen. Bevorzugt werden zumindest anteilsmäßig als (Poly)alkohole solche aus der Gruppe bestehend aus: lineare Polyesterpolyole, Polyetherpolyole, Polycarbonatpolyole, Polyacrylatpolyole oder einer Kombination aus mindestens zwei hiervon eingesetzt. In einer bevorzugten Ausführungsform tragen diese (Poly)alkohole oder (Poly)amine endständige Alkohol- und/oder Amin-Funktionalitäten. In einer weiteren bevorzugten Ausführungsform haben die (Poly)alkohole und oder (Poly)amine ein Molekulargewicht von 52 bis 10000 g/mol. Bevorzugt haben diese (Poly)alkohole oder (Poly)amine als Einsatzstoffe einen Schmelzpunkt im Bereich von 5 bis 150 °C. Bevorzugte Polyisocyanate, die zumindest anteilmäßig zur Herstellung der schmelzbaren Polyurethane verwendet werden können, sind TDI, MDI, HDI, PDI, H12MDI, IPDI, TODI, XDI, NDI und Decandiisocyanat. Besonders bevorzugte Polyisocyanate sind HDI, PDI, H12MDI, MDI und TDI.

Es ist ebenfalls bevorzugt, dass das schmelzbare Polymer ein Polycarbonat auf Basis von Bisphenol A und/oder Bisphenol TMC ist.

Alternativ kann es vorgesehen sein, dass das erste Material ein Metall ist. In dieser Ausgestaltung können Anwendungsgebiete etwa liegen in der Medizintechnik, um Luftfahrtbereich, im Automotive-Bereich oder im Bereich der Schmuckherstellung. Geeignete Metalle für das erste Material umfassen etwa Werkzeugstähle, Maraging-Stähle beziehungsweise martensitaushärtende Stähle, Edelstahl, Aluminium oder Aluminiumlegierungen, Cobalt-Chrom-Legierungen, Nickelbasierte Legierungen, wie etwa Superlegierungen, Titan und Titanlegierungen etwa in kommerzieller Reinheit, Kupfer und Kupferlegierungen oder Edelmetalle, wie etwa Gold, Platin, Palladium, Silber. Im erfindungsgemäßen Verfahren wird ein Gegenstand schichtweise aufgebaut. Ist die Anzahl der Wiederholungen für Auftragen und Bestrahlen hinreichend gering, kann auch von einem zweidimensionalen Gegenstand gesprochen werden, der aufgebaut werden soll. Solch ein zweidimensionaler Gegenstand lässt sich auch als Beschichtung charakterisieren. Beispielsweise können zu dessen Aufbau ≥ 2 bis ≤ 20 Wiederholungen für Auftragen und Bestrahlen durchgeführt werden.

Ein Verfahren zur Herstellung eines Gegenstandes aus einem Vorläufer, was ebenfalls Bestandteil des hier beschriebenen Verfahrens und dabei insbesondere des Schrittes a) sein kann, umfasst die Schritte:
I) Abscheiden eines radikalisch vernetzten Harzes auf einem Träger, welcher auch als Substrat bezeichnet werden kann, so dass eine Lage eines mit dem Träger verbundenen Aufbaumaterials erhalten wird, welche einem ersten ausgewählten Querschnitt des Vorläufers entspricht;
II) Abscheiden eines radikalisch vernetzten Harzes auf eine zuvor aufgetragene Lage des Aufbaumaterials, so dass eine weitere Lage des Aufbaumaterials erhalten wird, welche einem weiteren ausgewählten Querschnitt des Vorläufers entspricht und welche mit der zuvor aufgetragenen Lage verbunden ist;
III) Wiederholen des Schritts II), bis der Vorläufer gebildet ist; wobei das Abscheiden eines radikalisch vernetzten Harzes wenigstens in Schritt II) durch Belichten und/oder Bestrahlen eines ausgewählten Bereichs eines radikalisch vernetzbaren Harzes, entsprechend dem jeweils ausgewählten Querschnitt des Vorläufers, erfolgt.

In dem Verfahren wird nach Schritt III) weiterhin Schritt IV) durchgeführt:
IV) Behandeln des nach Schritt III) erhaltenen Vorläufers bei Bedingungen, die ausreichen, um im radikalisch vernetzten Harz eine Nachvernetzung zu erhalten durch die Einwirkung weiterer actinischer Strahlung und/oder thermisch induzierte Nachhärtung.

In dieser Ausgestaltung wird somit der Gegenstand in zwei Herstellungsabschnitten erhalten. Der erste Herstellungsabschnitt kann als Aufbauabschnitt angesehen werden. Dieser Aufbauabschnitt lässt sich mittels strahlenoptischer additiver Fertigungsverfahren wie dem Inkjet-Verfahren, der Stereolithographie oder dem DLP (digital light processing)-Verfahren realisieren und ist Gegenstand der Schritte I), II) und III). Der zweite Herstellungsabschnitt kann als Härtungsabschnitt angesehen werden und ist Gegenstand des Schritts IV). Hier wird der nach dem Aufbauabschnitt erhaltene Vorläufer oder intermediäre Gegenstand ohne seine Form weiter zu verändern in einen mechanisch dauerhafteren Gegenstand überführt. Das Material, aus dem der Vorläufer im additiven Fertigungsverfahren erhalten wird, wird im Rahmen der vorliegenden Erfindung allgemein als "Aufbaumaterial" bezeichnet.

In Schritt I) des Verfahrens erfolgt das Abscheiden eines radikalisch vernetzten Harzes auf einem Träger. Dieses ist gewöhnlich der erste Schritt in Inkjet-, Stereolithographie- und DLP-Verfahren. Auf diese Weise wird eine Lage eines mit dem Träger verbundenen Aufbaumaterials erhalten, welche einem ersten ausgewählten Querschnitt des Vorläufers entspricht.

Gemäß der Anweisung von Schritt III) wird Schritt II) so lange wiederholt, bis der gewünschte Vorläufer gebildet ist. In Schritt II) erfolgt das Abscheiden eines radikalisch vernetzten Harzes auf eine zuvor aufgetragene Lage des Aufbaumaterials, so dass eine weitere Lage des Aufbaumaterials erhalten wird, welche einem weiteren ausgewählten Querschnitt des Vorläufers entspricht und welche mit der zuvor aufgetragenen Lage verbunden ist. Bei der zuvor aufgetragenen Lage des Aufbaumaterials kann es sich um die erste Lage aus Schritt I) oder um eine Lage aus einer vorigen Durchlauf des Schritts II) handeln.

Es ist erfindungsgemäß vorgesehen, dass das Abscheiden eines radikalisch vernetzten Harzes wenigstens in Schritt II) (vorzugsweise auch in Schritt I) durch Belichten und/oder Bestrahlen eines ausgewählten Bereichs eines radikalisch vernetzbaren Harzes, entsprechend dem jeweils ausgewählten Querschnitt des Gegenstandes, erfolgt. Dieses kann sowohl durch selektives Belichten (Stereolithographie, DLP) des Harzes als auch durch selektives Auftragen des Harzes, gefolgt von einem Belichtungsschritt, der aufgrund des vorigen selektiven Auftragens des Harzes nicht mehr selektiv sein muss (Inkjet-Verfahren), erfolgen.

Im Kontext der vorliegenden Erfindung werden die Begriffe "radikalisch vernetzbares Harz" und "radikalisch vernetztes Harz" benutzt. Hierbei wird das radikalisch vernetzbare Harz durch das Belichten und/oder Bestrahlen, welches radikalische Vernetzungsreaktionen auslöst, in das radikalisch vernetzte Harz überführt. Unter "Belichten" wird hierbei die Einwirkung von Licht im Bereich zwischen nahem IR- und nahem UV-Licht (1400 nm bis 315 nm Wellenlänge) verstanden. Die übrigen kürzeren Wellenlängenbereiche werden durch den Begriff "Bestrahlen" abgedeckt, zum Beispiel fernes UV-Licht, Röntgenstrahlung, Gammastrahlung und auch Elektronenstrahlung.

Das Auswählen des jeweiligen Querschnitts erfolgt zweckmäßigerweise durch ein CAD-Programm, mit dem ein Modell des herzustellenden Gegenstandes erzeugt wurde. Diese Operation wird auch "Slicing" genannt, und dient als Grundlage für die Steuerung der Belichtung und/oder Bestrahlung des radikalisch vernetzbaren Harzes.

Das radikalisch vernetzbare Harz weist bevorzugt eine Viskosität (23 °C, DIN EN ISO 2884-1:2006-09) von ≥ 5 mPas bis ≤ 100000 mPas auf. Somit ist es zumindest für die Zwecke der additiven Fertigung als flüssiges Harz anzusehen. Vorzugsweise beträgt die Viskosität ≥ 50 mPas bis ≤ 10000 mPas, mehr bevorzugt ≥ 500 mPas bis ≤ 1000 mPas.

Neben den härtbaren Komponenten umfasst das radikalisch vernetzbare Harz bevorzugt eine nicht härtbare Komponente, wie Stabilisatoren, Füllstoffe und dergleichen.

Das Behandeln in Schritt IV) kann im einfachsten Fall ein Lagern bei Raumtemperatur RT (20 °C) sein, oder bevorzugt bei einer Temperatur oberhalb der Raumtemperatur RT.

Es ist bevorzugt, dass Schritt IV) erst dann durchgeführt wird, wenn das gesamte Aufbaumaterial des Vorläufers seinen Gelpunkt erreicht hat. Der Gelpunkt wird als erreicht angesehen, wenn in einer dynamisch-mechanischen Analyse (DMA) mit einem Platte/Platte-Oszillationsviskosimeter gemäß ISO 6721-10:2015 bei 20 °C sich die Graphen des Speichermoduls G' und des Verlustmoduls G" kreuzen. Gegebenenfalls wird der Vorläufer weiterer Belichtung und/oder Bestrahlung zur Vervollständigung der radikalischen Vernetzung ausgesetzt. Das radikalisch vernetzte Harz kann ein Speichermodul G' (DMA, Platte/Platte-Oszillationsviskosimeter gemäß ISO 6721-10:2015 bei 20 °C und einer Scherrate von 1/s) von ≥ 10⁶ Pa aufweisen.

Das radikalisch vernetzbare Harz kann weiterhin Additive wie Füllstoffe, UV-Stabilisatoren, Radikalinhibitoren, Antioxidantien, Formtrennmittel, Wasserfänger, Slipadditive, Entschäumer, Verlaufsmittel, Rheologieadditive, Flammschutzmittel und/oder Pigmente enthalten. Diese Hilfs- und Zusatzmittel, ausgenommen Füllstoffe und Flammschutzmittel, liegen üblicherweise in einer Menge von weniger als 10 Gew.-%, vorzugsweise weniger als 5 Gew.-%, besonders bevorzugt bis zu 3 Gew.-%, bezogen auf das radikalisch vernetzbare Harz vor. Flammschutzmittel liegen üblicherweise in Mengen von höchstens 70 Gew.-%, vorzugsweise höchstens 50 Gew.-%, besonders bevorzugt höchstens 30 Gew.-%, berechnet als Gesamtmenge an eingesetzten Flammschutzmitteln bezogen auf das Gesamtgewicht des radikalisch vernetzbaren Harzes vor.

Geeignete Füllstoffe sind beispielsweise AlOH₃, CaCO₃, Metallpigmente wie TiO₂ und weitere bekannte übliche Füllstoffe. Diese Füllstoffe werden vorzugsweise in Mengen von höchstens 70 Gew.-%, bevorzugt höchstens 50 Gew.-%, besonders bevorzugt höchstens 30 Gew.-%, berechnet als Gesamtmenge an eingesetzten Füllstoffen bezogen auf das Gesamtgewicht des radikalisch vernetzbaren Harzes, eingesetzt.

Geeignete UV-Stabilisatoren können vorzugsweise ausgewählt werden aus der Gruppe, bestehend aus Piperidinderivaten, wie z.B. 4-Benzoyloxy-2,2,6,6-tetramethylpiperidin, 4-Benzoyloxy-1,2,2,6,6-pentamethylpiperidin, Bis-(2,2,6,6-tetra-methyl-4-piperidyl)-sebacat, Bis(1,2,2,6,6-pentamethyl-1-4-piperidinyl)-sebacat, Bis-(2,2,6,6-tetramethyl-4-piperidyl)-suberat, Bis-(2,2,6,6-tetramethyl-4-piperidyl)-dodecandioat; Benzophenonderivaten, wie z.B. 2,4-Dihydroxy-, 2-Hydroxy-4-methoxy-, 2-Hydroxy-4-octoxy-, 2-Hydroxy-4-dodecyloxy- oder 2,2'-Dihydroxy-4-dodecyloxy-benzophenon; Benztriazolderivaten, wie z.B. 2-(2H-Benzotriazol-2-yl)-4,6-di-tert-pentylphenol, 2-(2H-Benzotriazol-2-yl)-6-dodecyl-4-methylphenol, 2-(2H-Benzotriazol-2-yl)-4,6-bis(1-methyl-1-phenylethyl)phenol, 2-(5-Chlor-2H-benzotriazol-2-yl)-6-(1,1-dimethylethyl)-4-methylphenol, 2-(2H-benzotriazol-2-yl)-4-(1,1,3,3-tetramethylbutyl)phenol, 2-(2H-Benzotriazol-2-yl)-6-(1-methyl-1-phenylethyl)-4-(1,1,3,3-tetramethylbutyl)phenol, Isooctyl-3-(3-(2H-benzotriazol-2-yl)-5-(1,1-dimethylethyl)-4-hydroxyphenylpropionat), 2-(2H-Benzotriazol-2-yl)-4,6-bis(1,1-dimethylethyl)phenol, 2-(2H-Benzotriazol-2-yl)-4,6-bis(1 -methyl-1 -phenylethyl)phenol, 2-(5-Chlor-2H-benzotriazol-2-yl)-4,6-bis(1,1-dimethylethyl)phenol; Oxalaniliden, wie z.B. 2-Ethyl-2'-ethoxy- oder 4-Methyl-4'-methoxyoxalanilid; Salicylsäureestern, wie z.B. Salicylsäurephenylester, Salicylsäure-4-tert-butylphenylester, Salicylsäure-4-tert-octylphenylester; Zimtsäureesterderivaten, wie z.B. α-Cyano-β-methyl-4-methoxyzimtsäuremethylester, α-Cyano-β-methyl-4-methoxyzimtsäurebutyl-ester, α-Cyano-β-phenylzimtsäureethylester, α-Cyano-β-phenylzimtsäureisooctylester; und Malonesterderivaten, wie z.B. 4-Methoxybenzylidenmalonsäuredimethylester, 4-Methoxybenzylidenmalonsäurediethylester, 4-Butoxybenzylidenmalonsäuredimethylester. Diese bevorzugten Lichtstabilisatoren können sowohl einzeln als auch in beliebigen Kombinationen untereinander zum Einsatz kommen.

Besonders bevorzugte UV-Stabilisatoren sind solche, die Strahlung einer Wellenlänge < 400 nm vollständig absorbieren. Hierzu zählen beispielsweise die genannten Benztriazolderivate. Ganz besonders bevorzugte UV-Stabilisatoren sind 2-(5-Chlor-2H-benzotriazol-2-yl)-6-(1,1-dimethylethyl)-4-methylphenol, 2-(2H-benzotriazol-2-yl)-4-(1,1,3,3-tetramethylbutyl)phenol und/oder 2-(5-Chlor-2H-benzotriazol-2-yl)-4,6-bis(1,1-dimethylethyl)phenol.

Gegebenenfalls werden ein oder mehrere der beispielhaft genannten UV-Stabilisatoren dem radikalisch vernetzbaren Harz vorzugsweise in Mengen von 0,001 bis 3,0 Gew.-%, besonders bevorzugt 0,005 bis 2 Gew.-%, berechnet als Gesamtmenge an eingesetzten UV-Stabilisatoren bezogen auf das Gesamtgewicht des radikalisch vernetzbaren Harzes, zugesetzt.

Geeignete Antioxidantien sind vorzugsweise sterisch gehinderten Phenole, welche vorzugsweise ausgewählt werden können aus der Gruppe, bestehend aus 2,6-Di-tert-butyl-4-methylphenol (Ionol), Pentaerythrit-tetrakis(3-(3,5-di-tert-butyl-4-hydroxy-phenyl)-propionat), Octadecyl-3-(3,5-di-tert-butyl-4-hydroxyphenyl)-propionat, Triethylen-glykol-bis(3-tert-butyl-4-hydroxy-5-methylphenyl)propionat, 2,2'-Thio-bis(4-methyl-6-tert-butylphenol) und 2,2'-Thiodiethyl-bis[3-(3,5-di-tert-butyl-4-hydroxyphenyl)propionat]. Diese können bei Bedarf sowohl einzeln als auch in beliebigen Kombinationen untereinander eingesetzt werden. Diese Antioxidantien werden vorzugsweise in Mengen von 0,01 bis 3,0 Gew.-%, besonders bevorzugt 0,02 bis 2,0 Gew.-%, berechnet als Gesamtmenge an eingesetzten Antioxidantien bezogen auf das Gesamtgewicht des radikalisch vernetzbaren Harze, eingesetzt.

Geeignete Radikalinhibitoren bzw. Verzögerer sind besonders solche, die eine unkontrollierte radikalische Polymerisation der Harzformulierung außerhalb des gewünschten (bestrahlten) Bereiches gezielt inhibieren. Diese sind für eine gute Randschärfe und Abbildungsgenauigkeit im Vorläufer entscheidend. Geeignete Radikalinhibitoren müssen entsprechend der gewünschten Radikalausbeute aus dem Bestrahlungs-/Belichtungsschritt und der Polymerisationsgeschwindigkeit und Reaktivität/Selektivität der Doppelbindungsträger ausgesucht werden. Geeignete Radikalinhibitoren sind z. B. 2,2-(2,5-thiophendiyl)bis(5-tertbutylbenzoxazol), Phenothiazin, Hydrochinone, Hydrochinonether, Quinonalkyde und Nitroxylverbindungen sowie Mischungen davon, Benzoquinone, Kupfer Salze, Brenzcatechine, Cresole, Nitrobenzol und Sauerstoff. Diese Antioxidantien werden vorzugsweise in Mengen von 0,001 Gew% bis 3 Gew.% eingesetzt.

Zusätzlich zu und insbesondere nach dem vorstehend beschriebenen Verfahrensschritt a) und damit nach dem Aufbauen des Gegenstands beziehungsweise nach dem Aufbauen der Geometrie des Gegenstands ist es bei dem hier beschriebenen Verfahren ferner vorgesehen, dass das Verfahren den weiteren Verfahrensschritt aufweist:
b) wenigstens teilweises Kontaktieren des noch auf dem Substrat befindlichen oder schon vom Substrat abgelösten durch additive Fertigung erzeugten Gegenstands mit einer auf ≥ T erwärmten Flüssigkeit oder einem auf ≥ T erwärmten Pulverbett aus einem zweiten Material für eine Zeit ≥ 1 min. um den behandelten Gegenstand zu erhalten, wobei
- T für eine Temperatur von ≥ 25 °C, bevorzugt von ≥ 50 °C, mehr bevorzugt von ≥ 75 °C, besonders bevorzugt von ≥ 150 °C steht, und wobei
- die Temperatur bevorzugt derart gewählt wird, dass soweit vorhanden, etwa bei einem Polymer als erstem Material, die Glasübergangstemperatur Tg des ersten Materials erreicht wird, und wobei
- insbesondere das zweite Material von dem ersten Material verschieden ist.

In diesem Verfahrensschritt wird der zuvor geformte Gegenstand somit weiter behandelt, um so den gewünschten Gegenstand zu erhalten. Insbesondere dient dieser Verfahrensschritt b) dazu, die Eigenschaften des erzeugten Gegenstands zu verbessern, insbesondere hinsichtlich seiner Stabilität und der Homogenität seiner Eigenschaften sowie dem Erhalt der gewünschten geometrischen Form des zuvor geformten Gegenstandes.

Hierzu erfolgt ein wenigstens teilweises und damit nur teilweises oder auch vollständiges Kontaktieren des noch auf dem Substrat befindlichen oder schon vom Substrat abgelösten durch additive Fertigung erzeugten Gegenstands. Somit kann der Gegenstand etwa von dem Substrat abgelöst werden und etwa in die Flüssigkeit oder in das Pulverbett gelegt werden, um so das kontaktieren zu ermöglichen. Ferner ist es möglich, dass das Substrat in einem Raum vorgesehen ist, in welchen Pulver zur Ausbildung des Pulverbetts oder eine Flüssigkeit gefüllt werden kann, um den Gegenstand so mit der Flüssigkeit oder dem Pulverbett zu kontaktieren. Dieser Schritt ist jedoch nicht auf die vorgenannten Beispiele beschränkt.

Das Kontaktieren soll dabei insbesondere unter definierten Bedingungen erfolgen. Insbesondere soll das Kontaktieren bei erhöhtem Druck erfolgen und damit bei einem Druck, der oberhalb des Atmosphärendruckes von 1bar liegt. Alternativ kann das Kontaktieren auch bei einem Unterdruck realisiert werden, also bei einem Druck, der unterhalb des Atmosphärendruckes von 1bar liegt. Grundsätzlich ist jedoch auch ein Kontaktieren unter Normaldruck, also bei 1bar, vom Rahmen der vorliegenden Erfindung umfasst.

Ferner ist es insbesondere vorgesehen, dass das Kontaktieren erfolgt unter Verwendung eines Pulverbetts oder einer Flüssigkeit, die vor oder während des Kontaktierens und damit des Kontaktes von dem Gegenstand und dem Pulverbett oder der Flüssigkeit auf eine Temperatur T erhitzt wird, die in einem Bereich von ≥ 25°C, bevorzugt von ≥ 50 °C, mehr bevorzugt von ≥ 75 °C, besonders bevorzugt von ≥ 150 °C liegt. Beispielsweise kann die Temperatur T, auf welche das Pulverbett oder die Flüssigkeit erhitzt wird, in einem Bereich liegen von ≥ 45°C, beispielsweise von ≥ 60 °C, weiter bevorzugt von ≥ 90°C, weiter bevorzugt von ≥ 120°C, weiter bevorzugt von ≥ 150°C, weiter bevorzugt von ≥ 180°C.

Ferner ist in einer ausgewählten Ausführungsform vorgesehen, dass das Kontaktieren mit einer transparenten Flüssigkeit erfolgt, die eine ausreichende UV-VIS Transparenz und UV-VIS Stabilität aufweist, um den vorgeformten Gegenstand bevorzugt bei Temperataturen oberhalb der Bauraumtemperatur des vorgeschalteten Bauprozesses mittels Strahlung gegebenenfalls regioselektiv nachzuvernetzen.

Darüber hinaus ist es vorgesehen, dass das Kontaktieren erfolgt für einen definierten Zeitraum. Dieser Zeitraum liegt insbesondere in einem Bereich von ≥ 1 Minute, beispielsweise von ≥ 5 Minuten, weiter bevorzugt von ≥ 5 Minuten, weiter bevorzugt von ≥ 10 Minuten, weiter bevorzugt von ≥ 15 Minuten, weiter bevorzugt von ≥ 20 Minuten aber bevorzugt < 72h, bevorzugt < 48h und besonders bevorzugt < 24h. Bevorzugt ist es vorgesehen, dass das Kontaktieren für einen Zeitraum in einem Bereich von 1 Minute bis 72h, oder bevorzugt von 10 Minuten bis 48h, oder bevorzugt von 20 Minuten bis 24h, erfolgt.

In einer bevorzugten Ausführungsform wird der additiv gefertigte Gegenstand mit dem Pulverbett oder der Flüssigkeit kontaktiert, wobei die Flüssigkeit oder das Pulverbett eine Temperatur < 50°C aufweist und im Anschluss zusammen mit dem additive gefertigten Gegenstand auf die gewünschte Endtemperatur aufgeheizt wird.

In einer weiteren bevorzugten Ausführungsform wird der additiv gefertigte Gegenstand nach der gewünschten Kontaktzeit mit der erwärmten Flüssigkeit oder dem erwärmten Pulverbett in kontrollierter Weise vor Entnahme und Reinigung von der Flüssigkeit oder dem Pulverbett auf eine Temperatur von < 50°C abgekühlt.

Auf diese Weise können gezielt Nachvernetzungs-, Sinter-, Kristallisations- oder Schmelzprozesse gesteuert werden, um die Eigenschaften des additiv gesinterten Bauteils in einer gewünschten Weise zu verändern.

In einer anderen bevorzugten Ausführungsform wird der additiv gefertigte Gegenstand mit dem schon vorgeheizten Pulverbett oder der Flüssigkeit kontaktiert, wobei die Flüssigkeit oder das Pulverbett eine Temperatur > 50°C aufweist, gegebenenfalls schon die Zieltemperatur.

In einer weiteren bevorzugten Ausführungsform wird der additiv gefertigte Gegenstand nach der gewünschten Kontaktzeit mit der erwärmten Flüssigkeit oder dem erwärmten Pulverbett in einer Zeit von <10 min, bevorzugt <5 min auf eine Temperatur von < 50°C, bevorzugt < 30°C abgeschreckt. Bevorzugt wird der Gegenstand nach der gewünschten Kontaktzeit mit der erwärmten Flüssigkeit oder dem erwärmten Pulverbett für eine Zeit in einem Bereich von 1 Sekunde bis 10 min abgeschreckt. Das Abschrecken wird bevorzugt durch Einbringen in ein Fluid mit einer Temperatur unterhalb von 50 °C, bevorzugt bei eine Temperatur in einem Bereich von 10 bis 50 °C durchgeführt.

Das Fluid kann jedes Fluid sein, das der Fachmann hierfür auswählen würde und den an anderer Stelle genannten Anforderungen genügt. Bevorzugt handelt es sich bei dem Fluid um Wasser, bevorzugt bei Raumtemperatur (20°C).

Auf diese Weise können gezielt Kristallisations- und Schmelzprozesse besonders auch Glasübergangsprozesse gesteuert werden um die Eigenschaften des additiv gesinterten Bauteils in einer gewünschten Weise zu verändern.

Gewünschte Eigenschaften können dabei sein, Kristallitgröße, Dichte, Kristallisationsgrad, Härte, Festigkeit, Zugdehnung, Abriebsbeständigkeit, Transparenz und andere.

Darüber hinaus ist auch das Material des Pulverbetts beziehungsweise der Flüssigkeit und damit des zweiten Materials wählbar und nicht grundsätzlich begrenzt. Geeignete Pulver sind insbesondere solche, die sich bei den gewählten Bedingungen nicht zersetzen und die ferner nicht mit dem ersten Material oder mit den ersten Materialien reagieren. Grundsätzlich kann es bevorzugt sein, dass das Pulver des Pulverbetts hinsichtlich des ersten Materials oder der ersten Materialien inert ist.

Gleiches gilt für die Flüssigkeit. Auch diese ist grundsätzlich wählbar, insoweit sie hinsichtlich des ersten Materials oder der ersten Materialien und damit hinsichtlich der Materialien, aus denen der Gegenstand aufgebaut ist, inert ist. Darüber hinaus ist es bei der Verwendung von Flüssigkeiten von Wichtigkeit, dass die Flüssigkeit kein Lösungsmittel für ein erstes Material ist.

In einer bevorzugten Ausführungsform können auch Pulver verwendet werden, die sich nach dem Aufheizen in Kontakt mit dem additiv gefertigten Gegenstand reversibel verflüssigen, oder Flüssigkeiten die sich verfestigen. Beispielhaft seien genannt Salze, die bei der gewünschten Sintertemperatur schmelzen oder konzentrierte Salzlösungen, die bei der gewünschten Temperatur durch Verdampfen von beispielsweise Lösungsmitteln oder Ausfallen beispielsweise in Lösungsmitteln in Kontakt mit dem additiv gefertigten Gegenstand verfestigen. Auf diese Weise kann der Gegenstand in dem Prozess mit einer stabilen Schale ummantelt werden, die nachträglich bevorzugt durch Lösungsmittel wie Wasser oder Alkohol abgewaschen werden kann.

In einer weiteren bevorzugten Ausführungsform, kann der additiv gefertigte Gegenstand mehrfach in eine Salzlösung oder andere konzentrierte Lösungen eines niedermolekularen Materials mit hohem Schmelzpunkt oder Glaspunkt getaucht und im Anschluss getrocknet werden, bis sich eine stabile Kruste bildet. Die Kruste stabilisiert bevorzugt die Form des additiv gefertigten Gegenstand für die spätere Temperaturbehandlung und kann nach dieser Behandlung wieder leicht mit Wasser oder einem anderen Lösungsmittel abgewaschen werden. Bevorzugt quillt das Lösungsmittel oder Wasser den additiv gefertigten Gegenstand bei der Behandlung nicht oder nur ≤ 10 Vol.-%, bevorzugt ≤ 5 Vol.-%, besonders bevorzugt ≤ 3 Vol.-%.

In einer bevorzugten Ausführungsform kann dabei der zu tempernde 3D gefertigte Gegenstand in eine Salzlösungen getaucht werden, aus dieser wieder entfernt werden, das Salz an der Oberfläche getrocknet, gegebenenfalls unter Temperatureinwirkung, gegebenenfalls der Vorgang mehrfach wiederholt und so eine stabile Salzkruste erzeugt werden, in der der Gegenstand bei der gewünschten Temperatur erhitzt und die Salzkruste nach der Wärmebehandlung mechanisch oder durch geeignete Lösungsmittel wie zum Beispiel, Wasser, Laugen, Säuren wieder vom Gegenstand entfernt werden.

In einer weiteren bevorzugten Ausführungsform, kann der additiv gefertigte Gegenstand mehrfach in eine konzentrierte Lösung eines niedermolekularen Materials mit hohem Schmelzpunkt oder Glaspunkt getaucht und im Anschluss getrocknet werden, bis sich eine stabile Kruste bildet. Die Kruste stabilisiert die Form des additiv gefertigten Gegenstandes für die spätere Temperaturbehandlung und kann nach dieser Behandlung wieder leicht durch Wasser oder andere Lösungsmittel abgewaschen werden.

Ein besonderer Vorteil der beschriebenen Verfahren, wo jeweils eine Kruste um den Gegenstand gebildet wird liegt darin, dass gezielt auch poröse Strukturen durch Infiltration und Stabilisierung der Poren im Produkt bei der nachgeschalteten Temperaturbelastung stabilisiert beziehungsweise erhalten werden können.

"Kein Lösungsmittel" bedeutet insbesondere, dass die Löslichkeit der betrachteten Komponente in der Flüssigkeit bei 20 °C ≤ 10 g/L, vorzugsweise ≤ 1 g/L, mehr bevorzugt ≤ 0.1 g/L und besonders bevorzugt ≤ 0.01 g/L beträgt. Besonders geeignete Flüssigkeiten führen weiterhin zu keiner ungewollten Verfärbung des Gegenstandes und lassen den Gegenstand nur reversibel oder bevorzugt gar nicht aufquellen.

Bezüglich der Flüssigkeiten zeichnen sich besonders geeignete Beispiele insbesondere dadurch aus, dass sie wiederholt bis auf die Erweichungstemperatur des ersten Materials, etwa des Thermoplasten, erhitzt werden können, ohne Degradationserscheinungen zu zeigen.

Bevorzugt ist die Oberflächenspannung der Flüssigkeit als zweiten Material mindestens 10 mN/m kleiner oder größer als die Oberflächenspannung des ersten Materials, etwa des thermoplastischen Materials des Bauteils.

Es können bevorzugt niederflüchtige apolare Flüssigkeiten verwendet werden, die unter Druck bis auf die gewünschten Temperaturen erhitzt werden können, danach aber leicht vom erhaltenen, behandelten Gegenstand zu entfernen sind.

Grundsätzlich kann es bevorzugt vorgesehen sein, dass das erste Material oder die ersten Materialien von dem Material des Pulverbetts und der Flüssigkeit oder grundsätzlich dem zweiten Material verschieden ist. Das zweite Material kann jedes Material beinhalten, das der Fachmann für den Zweck der Erfindung hierfür verwenden würde. Bevorzugt hat das zweite Material einen höheren Schmelzpunkt als das erste Material.

In einer weiteren bevorzugten Ausführungsform ist die bei Verfahrensschritt b) verwendete Flüssigkeit als zweites Material ausgewählt aus der Gruppe bestehend aus Silikonölen, Paraffinölen, fluorierten Kohlenwasserstoffen, Polyethylenwachsen, Salzwasser, Metallschmelzen, Salzschmelzen beziehungsweise ionischen Flüssigkeiten und Mischungen der genannten Flüssigkeiten. Im Fall des Salzwassers ist eine gesättigte Alkali oder Erdalkali-Cl-Lösung wie beispielweise LiCl, KCl, NaCl und/oder MgCl₂, CaCl₂ sowie Mischungen daraus bevorzugt. Es hat sich gezeigt, dass insbesondere die vorgenannten Materialien beziehungsweise Flüssigkeiten vorteilhaft sind, da diese auch bei den angewandten Bedingungen, wie etwa Temperatur und Druck stabil sind und nicht verfärbend, beziehungsweise nicht den Gegenstand verfärben nicht oxidierend oder reduzierend und nur geringes saures oder basisches Potential in Wasser aufweisen und ferner eine effektive Behandlung des Gegenstands ermöglichen.

Vorteilhaft enthält das bei Verfahrensschritt b) verwendete Pulverbett Partikel als zweites Material ausgewählt aus der Gruppe bestehend aus Siliziumdioxid, wie etwa Sand oder Glas, Polytetrafluoroethylen, Aluminiumoxid, Metallen, Metallsalzen, Zuckern, Organischen Salzen, Polyethylen-Wachs, Polyester, Polyacrylsäure, Polyethylenoxid, Polyoxymethylen Polycarbonat oder eine Mischung aufweisend wenigstens eine der vorgenannten Substanzen. Besonders bevorzugt sind dabei Pulver mit einer hohen Wärmeleitfähigkeit von ≥ 0.2 Wm⁻¹K⁻¹. Die Wärmeleitfähigkeit kann dabei bestimmt werden wie in der Publikation TK04 Application Note, 2015, TeKa, Berlin, Germany "Testingfragments and powder ", beschrieben. Oder Pulver, die bei 23°C fest sind und sich leicht und reversibel zwischen einem Feststoff und einer Schmelze bei Anwendungstemperatur umwandeln lassen. Besonders vorteilhaft sind deshalb Produkte, die eine niedrige Viskosität < 10000 mPas, bevorzugt < 5000 mPas stärker bevorzugt < 2000 mPas und besonders stark bevorzugt < 1000 mPas in der Schmelze bei einer Temperatur 20°C oberhalb der Erweichungstemperatur und eine hohe Sprödigkeit als Pulver aufweisen, das heißt eine geringe Verformbarkeit als Feststoff bei 23°C, bevorzugt eine Bruchdehnung < 50%, bevorzugt < 30% und stärker bevorzugt < 20% im Zugversuch nach DIN EN ISO 527-2:2012. Es hat sich gezeigt, dass insbesondere die vorgenannten Materialien vorteilhaft sind, da diese auch bei den angewandten Bedingungen, wie etwa Temperatur und Druck stabil sind und ferner eine effektive Behandlung des Gegenstands ermöglichen. Darüber hinaus lassen sich die vorgenannten Materialien im Wesentlichen rückstandsfrei von dem Gegenstand entfernen.

Wird das zweite Material in Form eines Pulverbettes eingesetzt, so weisen die Pulverpartikel des zweiten Materials bevorzugt eine Partikelgröße in einem Bereich von 5 bis 5000 µm oder bevorzugt in einem Bereich von 10 bis 2000 µm, oder bevorzugt in einem Bereich von 50 bis 500 µm auf. Die Partikelgröße wird durch Laserbeugung mittels statischer Laserbeugungsanalyse nach ISO 13320:2009-10 bestimmt.

Besonders bevorzugt ist, wenn das zweite Material beziehungsweise das Pulverbett ein Metallsalz beinhaltet. Insbesondere kann für das zweite Material ein derartiges Salz gewählt werden, das einen Schmelzpunkt aufweist, der höher ist, als der Schmelzpunkt des ersten Materials. Dies ermöglicht eine Behandlung des Gegenstands auch bei hohen Temperaturen, wobei vorteilhaft verringerte Risiken des Anwenders bei der Handhabung und im Kontakt mit solchen Salzen bei höheren Temperaturen entstehen, da diese leicht und schnell von der Haut oder Kleidung zu entfernen sind. Darüber hinaus kann es bevorzugt sein, wenn das Salz wasserlöslich ist, da in diesem Fall ein einfaches Abspülen des Salzes beziehungsweise des zweiten Materials nach dem Behandeln beziehungsweise nach Verfahrensschritt b) möglich. Besonders bevorzugt kann es sein, dass das Metallsalz ausgewählt ist aus der Gruppe bestehend aus Natriumchlorid (NaCl), Kaliumchlorid (KCl) Magnesiumchlorid (MgCl₂), Calciumchlorid (CaCl₂), Kaliumcarbonat (K₂CO₃), Lithiumchlorid (LiCl), Magnesiumoxid (MgO), Magnesiumsulfat (MgSO₄) Calciumoxid (CaO), Calciumcarbonat (CaCO₃) und Magnesiumfluorid (MgF₂).

Durch das Verwenden derartiger Metallsalze kann es ermöglicht werden, dass der Gegenstand eine verbesserte Oberflächenstruktur aufweist und eine weiter verbesserte Beständigkeit erreicht werden kann. Die verbesserte Oberflächenstruktur äußert sich zum Beispiel in einer verringerten Porigkeit der Oberfläche. Die verbesserten Eigenschaften äußern sich zum Beispiel in einer erhöhten Härte des Gegenstandes, einen erhöhten Modul des Gegenstandes, einer erhöhten Reißfestigkeit des Gegenstandes gegenüber dem unbehandelten Gegenstand.

Darüber hinaus kann es bei den vorstehend beschriebenen zweiten Materialien, also den vorbeschriebenen Pulvern beziehungsweise Flüssigkeiten oder auch bei anderen Substanzen, die als zweite Materialien geeignet sind, von Vorteil sein, dass diese wasserlöslich sind. Denn insbesondere wasserlösliche Substanzen lassen sich auf einfache Weise an dem Gegenstand anlösen und so von diesem entfernen.

Weiterhin kann es bevorzugt sein, dass das zweite Material löslich ist in einer Säure, einer Base oder einem organischen Lösungsmittel. Auch in dieser Ausgestaltung lassen sich auf einfache Weise Substanzen an dem Gegenstand anlösen und so von diesem entfernen.

Weiterhin kann es vorgesehen sein, dass Verfahrensschritt b) erfolgt unter Verwendung von kritischem Kohlendioxid als zweites Material. Kritisches Kohlendioxid beziehungsweise überkritisches CO₂ entsteht, wenn Druck und Temperatur über dem kritischen Punkt für Kohlenstoffdioxid liegen: Somit sollte das Kohlendioxid insbesondere vorliegen bei einer Temperatur von mehr als 304,13 K (30,980 °C) und bei einem Druck von über 7,375 MPa (73,75 bar). Vorteil dieser Ausgestaltung kann insbesondere darin gesehen werden, dass das Kohlendioxid bei überkritischen Bedingungen effektiv den Gegenstand behandeln kann und nach der Behandlung bei Normalbedingungen als Gas besonders einfach und rückstandsfrei von dem Gegenstand entfernt werden kann.

Im erfindungsgemäßen Verfahren wird der nach dem additiven Fertigungsverfahren erhaltene Gegenstand somit wenigstens teilweise durch eine erwärmte Flüssigkeit oder ein erwärmtes Pulverbett kontaktiert. Der erhaltene Gegenstand bleibt durch das Bindemittel formstabil und das wenigstens eine erste Material kann zu dem behandelten Gegenstand "versintert" bzw. nachgehärtet werden.

Es hat sich gezeigt, dass insbesondere das Kontaktieren des Gegenstands mit dem Pulverbett oder mit der Flüssigkeit wie an anderer Stelle beschrieben die Eigenschaften des Gegenstands und auch das Verfahren selbst in deutlicher Weise verbessern kann.

Das hier beschriebene Verfahren weist mehrere Vorteile gegenüber dem im Stand der Technik oder gängigen Selective Laser Sintering- oder und High Speed Sintering-Verfahren auf. So kann die Bauraumtemperatur bei einem dem Binderjetting analogen Verfahren niedrig sein. Durch das nachfolgende, aber räumlich trennbare Sintern können Prozesse deutlich vereinfacht und kostengünstiger angeboten werden, da keine beheizten Bauräume notwendig sind.

Das erfindungsgemäße Verfahren erlaubt ferner die Verarbeitung fast beliebiger thermoplastischer Pulver, da die Probleme des Bauraumverfahrens im SLS- und HS-Prozess nicht auftauchen. Mit dem erfindungsgemäße Verfahren können, nach Kenntnis der Erfinder erstmalig, auch nichtkristalline Thermoplasten verfahrenssicher, das heißt mit einer Bauraumtemperatur bevorzugt < 5°C besonders bevorzugt < 20°C und ganz besonders bevorzugt < 40°C der Erweichungstemperatur des eingesetzten Pulvers ,bevorzugt auf Basis von organischen polymeren Materialien zu mechanisch hochwertigen Bauteilen das heißt Bauteilen mit mindestens 50% der Festigkeit von spritzgegossenen Bauteilen verarbeitet werden.

Im erfinderischen Verfahren können weiterhin komplexe Bauteilgeometrien realisiert werden, da die Flüssigkeit/das Pulverbett analog dem Pulver im SLS- und HS-Verfahren der Schwerkraft schützend entgegenwirken.

Insbesondere hat es sich gezeigt, dass der Gegenstand eine verbesserte Stabilität erhalten kann auch in einer Richtung parallel zu der Ebene der zum Aufbau des Gegenstands erzeugten Schichten. Darüber hinaus kann eine hohe Homogenität der mechanischen Eigenschaften erhalten werden. Auch dadurch, dass das erfinderische Verfahren auch unter Druck durchgeführt werden kann. Der Druck kann wird dabei bevorzugt über eine mechanische Komprimierung der Pulver oder Flüssigkeitsphase erreicht. In einer bevorzugten Ausführungsform kann der Druck auch durch Anlegen eines Überdruckes eines z.B. Gases erhalten werden.

In einer weiteren bevorzugten Ausführungsform ist dabei das eingesetzte Gas ein Inertgas das bei der bevorzugten Behandlungstemperatur weder oxidierend noch reduzierend wirkt. Bevorzugte Inertgase sind dabei CO₂, N₂, Argon, Neon.

Durch das erfindungsgemäße Verfahren können Werkstoffe mit höherer Dichte, Härte und Festigkeit als durch gängige Sinterverfahren erhalten werden, da das Bindemittel einen Teil der Porosität, der in einem normalen Sinterverfahren entsteht, verhindert.

Nach dem Sintern wird die Temperatur der Flüssigkeit oder des Pulvers bevorzugt auf einen Wert von < 50 °C unterhalb der Erweichungstemperatur des zu behandelnden Gegenstandes abgesenkt und der behandelte Gegenstand wird erhalten. Bevorzugt wird der behandelte Gegenstand gewaschen.

Nach Erhalt des Gegenstands beziehungsweise nach Verfahrensschritt b) kann dieser aus dem Pulverbett oder der Flüssigkeit entfernet werden und ferner gegebenenfalls von dem Substrat gelöst werden. Anschließend kann der Gegenstand von Rückständen des Pulverbetts oder der Flüssigkeit befreit werden.

Bei dem Vorsehen eines Pulverbetts kann der Gegenstand etwa von Pulverrückständen mittels üblicher Methoden wie Bürsten oder Pressluft befreit werden. Bei dem Verwenden von Flüssigkeiten können diese etwa durch weitere bezüglich des Gegenstands inerte Lösungsmittel abgewaschen werden und/oder der Gegenstand kann getrocknet werden.

Bevorzugt kann es vorgesehen sein, dass das Verfahren mindestens einen weiteren Verfahrensschritt oder eine Kombination von weiteren Verfahrensschritten aufweist, ausgewählt aus:
A) Ablösen des durch additive Fertigung erzeugten Gegenstands von dem Substrat vor Verfahrensschritt b);
B) Zumindest teilweises Entfernen von nicht reagiertem ersten Material, insbesondere flüssigem Material, Pulver oder Stützmaterial von dem additiv gefertigten Gegenstand vor Verfahrensschritt b);
C) Nachhärten des durch additive Fertigung in Verfahrensschritt a) erzeugten Gegenstands mittels actinischer Strahlung;
D) Abkühlen der erwärmten Flüssigkeit oder des erwärmten Pulverbetts auf eine Temperatur in einem Bereich von < 200°C insbesondere in einem Bereich von ≤ 160°C, bevorzugt in einem Bereich von ≤ 130°C, weiter bevorzugt in einem Bereich von ≤ 50°C, weiter bevorzugt in einem Bereich von ≤ 30°C vor einer Entnahme des behandelten Gegenstands nach dem Verfahrensschritt b);
E) zumindest teilweises mechanisches Entfernen des zweiten Materials von dem Gegenstand während oder nach dem Verfahrensschritt b), beispielsweise mittels Abfiltrieren, Wegblasen, Absaugen, Abrütteln, Abschleudern oder einer Kombination aus mindestens zwei hiervon; und
F) Abwaschen des zweiten Materials nach Verfahrensschritt b) nach Entnahme des Gegenstands aus der Flüssigkeit oder dem Pulver mit einem Lösungsmittel, wobei das Lösungsmittel kein Lösungsmittel oder Reaktionspartner für das erste Material bei einer Temperatur in einem Bereich von T ≤ 200°C , insbesondere in einem Bereich von ≤ 150°C, bevorzugt in einem Bereich von ≤ 100°C, weiter bevorzugt in einem Bereich von ≤ 60°C, weiter bevorzugt in einem Bereich von ≤ 40°C, weiter bevorzugt in einem Bereich von ≤ 20°C, für einen Zeitraum von bevorzugt ≤ 30min, insbesondere einem Zeitraum von ≤ 25min, bevorzugt einem Zeitraum von ≤ 20min, weiter bevorzugt einem Zeitraum von ≤ 15min, weiter bevorzugt einem Zeitraum von ≤ 10min, weiter bevorzugt einem Zeitraum von ≤ 5min darstellt. Bevorzugt beträgt der Zeitraum ≥ 1 Sekunde bis ≤ 30 min, oder bevorzugt ≥ 10 Sekunde bis ≤ 20 min.

Bei dem Abwaschen wird das zweite Material bevorzugt in dem ersten Waschschritt zu mehr als 90 %, oder bevorzugt zu mehr als 95 %, oder bevorzugt zu mehr als 99 %, bezogen auf die Gesamtoberfläche des Gegenstandes entfernt.

Die vorbeschriebenen Schritte A) bis F) beschreiben somit weitere vorteilhafte Schritte, die jeweils alleine oder in einer grundsätzlich wählbaren Kombination ausgeführt werden können, wenn der Gegenstand gemäß Verfahrensschritt b) in ausreichender Weise mit dem Pulverbett oder mit der Flüssigkeit behandelt wurde.

Durch den Verfahrensschritt A) kann der Gegenstand auf besonders einfache Weise mit dem Pulverbett beziehungsweise der Flüssigkeit behandelt werden und können ferner besonders homogene Eigenschaften erhalten werden.

Durch den Verfahrensschritt B) kann es ermöglicht werden, dass das Pulverbett beziehungsweise die Flüssigkeit unmittelbar auf den Gegenstand einwirkt, ohne dass etwaige störende an dem Gegenstand vorliegende Substanzen zu Inhomogenitäten führen können.

Verfahrensschritt C) erlaubt es ferner, dass der Gegenstand eine besonders hohe Stabilität bei gleichzeitig homogenen Eigenschaften erhält.

Durch Verfahrensschritt D) wird ferner ein prozesstechnisch vorteilhaftes Entnehmen des Gegenstands aus dem Pulverbett beziehungsweise der Flüssigkeit erlaubt.

Verfahrensschritt E) ermöglicht es weiterhin, den Gegenstand in einer hohen Reinheit zu erhalten.

Dieser Verfahrensschritt kann sowohl für Reste des Pulverbettes als auch der Flüssigkeit erfolgen. Gleiches gilt grundsätzlich in entsprechender Weise für den Verfahrensschritt F).

Nach Erhalt des Gegenstandes, also insbesondere vor dem Verfahrensschritt b), kann dieser weiterhin über gängige Nachbearbeitungsverfahren wie Beschichten oder Infundieren mit geeigneten Beschichtungs- oder Infusionsmitteln wie zum Beispiel einer wässrigen Polyurethandispersion mit anschließendem Trocknung und Aushärtung bei Temperaturen von 20 °C oder mehr unterhalb der Erweichungstemperatur -wobei die Erweichungstemperatur definiert ist als die Schmelztemperatur des unbehandelten Gegenstands- in seiner Formfestigkeit verstärkt werden, bevor es zum Kontakt mit der inerten Flüssigkeit oder dem inerten Pulvermaterial kommt.

In einer weiteren bevorzugten Ausführungsform wird während des Kontaktierens des Gegenstands mit der Flüssigkeit oder dem Pulverbett gemäß Verfahrensschritt b) die Flüssigkeit oder das Pulverbett wenigstens zeitweise unter Überdruck gesetzt. Bevorzugt liegt der relative Druck, also der Überdruck, in einem Bereich von ≥ 1 bar bis ≤ 1000 bar, insbesondere bei ≥ 1,5bar bis ≤ 200 bar, bevorzugt bei ≥ 2 bar bis ≤ 50 bar, besonders bevorzugt bei ≥ 2,5 bar bis ≤ 20 bar und ganz besonders bevorzugt bei ≥ 4 bar bis ≤ 10 bar. Der Druckaufschlag kann dabei in geeigneten Autoklaven aus Glas oder Metall durchgeführt werden mittels Aufpressen eines geeigneten Gases oder durch mechanische Verringerung des Autoklavenvolumens. Beim Beaufschlagen der Flüssigkeit oder des Pulverbetts mit Überdruck kann die Temperatur der Flüssigkeit oder des Pulverbetts gegenüber Verfahrensvarianten ohne Druckbeaufschlagung gesenkt werden, beispielsweise um ≥ 5 °C oder ≥ 10 °C.

Es kann weiterhin bevorzugt sein, dass während des Kontaktierens des Gegenstands mit der Flüssigkeit oder dem Pulverbett gemäß Verfahrensschritt b) die Flüssigkeit oder das Pulverbett wenigstens zeitweise unter Unterdruck beziehungsweise unter Vakuum gesetzt. Bevorzugt liegt der relative Druck, also der Unterdruck, in einem Bereich von ≥ 0,01 bar bis ≤ 1 bar, insbesondere bei ≥ 0,03 bar bis ≤ 0,9 bar, bevorzugt bei ≥ 0,05 bar bis ≤ 0,8 bar, besonders bevorzugt bei ≥ 0,08 bar bis ≤ 0,7 bar. Der Vakuumaufschlag kann dabei in geeigneten Autoklaven aus Glas oder Metall durchgeführt werden mittels Entfernen des in dem Autoklaven befindlichen geeigneten Gases oder durch mechanische Vergrößerung des Autoklavenvolumens. Beim Beaufschlagen der Flüssigkeit oder des Pulverbetts mit Unterdruck kann die Temperatur der Flüssigkeit oder des Pulverbetts gegenüber Verfahrensvarianten ohne Druckbeaufschlagung gesenkt werden, beispielsweise um ≥ 5 °C oder ≥ 10 °C.

Es kann weiterhin bevorzugt sein, dass während des Kontaktierens des Gegenstands mit dem zweiten Material in Form der Flüssigkeit oder dem Pulverbett gemäß Verfahrensschritt b) das Pulverbett oder die Flüssigkeit wenigstens zeitweise mit einem Inertgas geflutet wird, oder wenigstens zweitweise ein Inertgas in Flüssigkeit geleitet wird. Unter einem Inertgas kann dabei insbesondere ein derartiges Gas verstanden werden, das mit dem Material des Gegenstands und mit dem Material des Pulverbetts beziehungsweise der Flüssigkeit nicht reagiert. Insbesondere soll das Gas derartig ausgestaltet sein, dass es bezüglich des Materials oder der Materialien des Gegenstands und des Pulverbetts beziehungsweise der Flüssigkeit keine oxidierenden Eigenschaften aufweist. Inertgas kann besonders bevorzugt ausgewählt sein aus der Gruppe bestehend aus Helium (He), Argon (Ar), Stickstoff (N₂) und Kohlendioxid (CO₂).

Es kann weiterhin bevorzugt sein, dass die bei Verfahrensschritt b) eingestellte Temperatur T, ausgedrückt in Grad Celsius, im Mittel ≤ 95% der Zersetzungstemperatur des ersten Materials liegt, wobei die Zersetzungstemperatur bestimmt wird als Verlust von 10 Gew.% in einer TGA Messung unter Stickstoff mit einer Heizrate von 20°C / Minute des ersten Materials. Dadurch kann eine effektive Behandlung des Gegenstands kombiniert werden mit einer für den Gegenstand schonenden Behandlung.

Es kann weiterhin bevorzugt sein, dass die Temperatur T bei Verfahrensschritt b) in einem Bereich von ≥ 40 °C bis ≤ 2000 °C liegt. Dabei kann es besonders bevorzugt sein, dass die Temperatur T in einem Bereich von ≥ 50 °C bis ≤ 1500 °C, weiter bevorzugt in einem Bereich von ≥ 60 °C bis ≤ 1000 °C, weiter bevorzugt in einem Bereich von ≥ 80 °C bis ≤ 800 °C, weiter bevorzugt in einem Bereich von ≥ 100 °C bis ≤ 600 °C, weiter bevorzugt in einem Bereich von ≥ 140 °C bis ≤ 300 °C, liegt.

Weiterhin ist es bevorzugt, dass die Temperatur T bei Verfahrensschritt b) größer ist, als eine Temperatur die 50°C unterhalb der Vicat-Erweichungstemperatur (VST = *Vicat softening temperature*) des ersten Materials liegt, und dass die Temperatut T kleiner ist, als eine Temperatur, die 150°C oberhalb der Vicat-Erweichungstemperatur des ersten Materials ist, wobei die Vicat-Erweichungstemperatur ermittelbar ist nach DIN EN ISO 306:2014-03. Besonders bevorzugt kann es sein, dass die Temperatur T bei Verfahren0sschritt b) größer ist, als eine Temperatur die 30°C unterhalb der Vicat-Erweichungstemperatur (VST = *Vicat softening temperature*) des ersten Materials liegt, und dass die Temperatut T kleiner ist, als eine Temperatur, die 120°C oberhalb der Vicat-Erweichungstemperatur des ersten Materials ist, weiter bevorzugt, dass die Temperatur T bei Verfahrensschritt b) größer ist, als eine Temperatur die 25°C unterhalb der Vicat-Erweichungstemperatur (VST = *Vicat softening temperature*) des ersten Materials liegt, und dass die Temperatut T kleiner ist, als eine Temperatur, die 100°C oberhalb der Vicat-Erweichungstemperatur des ersten Materials ist, weiter bevorzugt, dass die Temperatur T bei Verfahrensschritt b) größer ist, als eine Temperatur die 20°C unterhalb der Vicat-Erweichungstemperatur (VST = *Vicat softening temperature*) des ersten Materials liegt, und dass die Temperatut T kleiner ist, als eine Temperatur, die 90°C oberhalb der Vicat-Erweichungstemperatur des ersten Materials, weiter bevorzugt, dass die Temperatur T bei Verfahrensschritt b) größer ist, als eine Temperatur die 15°C unterhalb der Vicat-Erweichungstemperatur (VST = *Vicat softening temperature*) des ersten Materials liegt, und dass die Temperatut T kleiner ist, als eine Temperatur, die 80°C oberhalb der Vicat-Erweichungstemperatur des ersten Materials. Dadurch kann eine effektive Behandlung des Gegenstands kombiniert werden mit einer für den Gegenstand schonenden Behandlung.

In einer weiteren bevorzugten Ausführungsform wird die Temperatur T bei Verfahrensschritt b) weiterhin so gewählt, dass, bei dem Verwenden ein schmelzbares Polymer als erstes Material verwendet wird, bei dieser Temperatur der Elastizitätsmodul, bestimmt mittels DMA Speichermodul als G' (DMA, Platte/Platte-Oszillationsviskosimeter gemäß ISO 6721-10:2011-08 bei einer Scherrate von 1/s), des schmelzbaren Polymers ≥ 10⁵ Pa bis ≤ 10⁸ Pa, bevorzugt ≥ 5 · 10⁵ Pa bis ≤ 5 · 10⁷ Pa, mehr bevorzugt ≥ 1 · 10⁶ Pa bis ≤ 1 · 10⁷ Pa, beträgt. Dies erlaubt eine effektive Behandlung des Gegenstands bei Minimierung der Deformationsgefahr des Grünköpers.

In einer weiteren bevorzugten Ausführungsform beträgt die Temperatur T, ausgedrückt in Grad Celsius, weiterhin dann, wenn das erste Material einen Binder aufweist, ≤ 95%, bevorzugt ≤ 90%, mehr bevorzugt ≤ 85%, der Zersetzungstemperatur des Bindemittels nach Vernetzung, wobei die Zersetzungstemperatur definiert ist als die Temperatur, bei der ein Massenverlust von ≥ 10% in einer thermogravimetrischen Analyse bei einer Heizrate von 20 °C/min im Stickstoffstrom festgestellt wird. In dieser Ausgestaltung kann wiederum ein effektives und gleichzeitig schonendes Behandeln des Gegenstands ermöglichen.

Im Folgenden beziehungsweise in den Tabellen 1 und 2 werden erfindungsgemäß besonders bevorzugte aber in keiner Weise beschränkende Beispiele von Kombinationen von ersten Materialien und Materialien für das Pulverbett beziehungsweise die Flüssigkeit genannt.

Beispiele für besonders geeignete Kombinationen von schmelzbaren Polymeren beziehungsweise Thermoplasten für den Verfahrensschritt a) als erstes Material und Flüssigkeiten als zweites Material für den Verfahrensschritt b) im erfindungsgemäßen Verfahren werden nachfolgend in Tabelle 1 aufgeführt:

**Tabelle 1: Materialbeispiele für erstes und zweites Material**

| **Schmelzbares Polymer (erstes Material)** | **Flüssigkeit (zweites Material)** |
|---|---|
| Thermoplastisches Polyurethan (TPU) | Silikonöl, PE Wachse, Fluorkohlenwasserstoffe |
| Polycarbonat (PC) | Silikonöl, PE Wachse |
| Polymethylmethacrylat (PMMA) | Salzwasser, Silikonöl, PE Wachse |
| Polyamid (PA) | Silikonöl, Fluorkohlenwasserstoffe |
| Polypropylen (PP) | Silikonöl, Salzwasser |
| Polystyrol (PS | Silikonöl, Salzwasser |
| Acrylnitrilbutadienstyrol (ABS) | Silikonöl, PE Wachse, Salzwasser |
| Polyethylen (PE) | Silikonöl, Salzwasser |
| Polychloropren Rubber (CR) | Silikonöl, Salzwasser |
| Styrol-Butadien-Blockcopolymere (SBS) | Silikonöl, Salzwasser |
| Polyvinylchlorid (PVC) | Silikonöl, Salzwasser |
| Polyvinylacetat (PVA) | Silikonöl, PE Wachse |

Beispiele für besonders geeignete Kombinationen von schmelzbaren Polymeren beziehungsweise Thermoplasten für den Verfahrensschritt a) als erstes Material und für Materialien eines Pulverbetts als zweites Material für den Verfahrensschritt b) im erfindungsgemäßen Verfahren werden nachfolgend in Tabelle 2 aufgeführt:

**Tabelle 2: Materialbeispiele für erstes und zweites Material**

| **Schmelzbares Polymer (erstes Material)** | **Pulverbett (zweites Material)** |
|---|---|
| Thermoplastisches Polyurethan (TPU) | NaCl, MgSO₄, MgCl₂, CaCO₃ |
| Polycarbonat (PC) | NaCl, MgSO₄, MgCl₂, CaCO₃ |
| Polymethylmethacrylat (PMMA) | NaCl, MgSO₄, MgCl₂, CaCO₃ |
| Polyamid (PA) | NaCl, MgSO₄, MgCl₂, CaCO₃ |
| Polypropylen (PE) | NaCl, MgSO₄, MgCl₂, CaCO₃, Stärke, Zucker |
| Acrylnitrilbutadienstyrol (ABS) | NaCl, MgSO₄, MgCl₂, CaCO₃, Stärke, Zucker |
| Polyethylen (PE) | NaCl, MgSO₄, MgCl₂, CaCO₃, Stärke, Zucker |
| Polychloropren Rubber (CR) | NaCl, MgSO₄, MgCl₂, CaCO₃, Stärke, Zucker, |
| Styrol-Butadien-Blockcopolymere (SBS) | NaCl, MgSO₄, MgCl₂, CaCO₃, Stärke, Zucker |
| Polyvinylchlorid (PVC) | NaCl, MgSO₄, MgCl₂, CaCO₃, Stärke, Zucker |
| Polyvinylacetat (PVA) | NaCl, MgSO₄, MgCl₂, CaCO₃, Stärke, Zucker |
| Polyfluorethylen (PTFE) | NaCl, MgSO₄, MgCl₂, |
| Polyetheretherketon (PEEK) | NaCl, MgSO₄, MgCl₂, |
| Polyamid 6 | NaCl, MgSO₄, MgCl₂, CaCO₃ |
| Polyamid 66 | NaCl, MgSO₄, MgCl₂, CaCO₃ |
| Polyamdid 12 | NaCl, MgSO₄, MgCl₂, CaCO₃ |
| Polyamid 46 | NaCl, MgSO₄, MgCl₂, CaCO₃ |
| Polyamid 11 | NaCl, MgSO₄, MgCl₂, CaCO₃ |
| Copolyamid | NaCl, MgSO₄, MgCl₂, CaCO₃ |
| Copolyesteramid | NaCl, MgSO₄, MgCl₂, CaCO₃ |
| Copolyetheramide (PEBA) | NaCl, MgSO₄, MgCl₂, CaCO₃ |
| Polyarylehterketon (PEAK) | NaCl, MgSO₄, MgCl₂, CaCO₃ |
| Polyimide | NaCl, MgSO₄, MgCl₂, CaCO₃ |
| Polyarylsulfone | NaCl, MgSO₄, MgCl₂, CaCO₃ |

Gegenstand der vorliegenden Offenbarung ist ferner ein behandelter Gegenstand, erhältlich durch ein Verfahren, wie dies vorstehend im Detail beschrieben ist. Ein derartiger Gegenstand kann insbesondere verbesserte mechanische Eigenschaften aufweisen. Der Gegenstand hergestellt gemäß dem erfindungsgemäßen Verfahren weist eine Oberfläche mit einem Mittenrauwert Ra (DIN EN ISO 4287:2010-07) von ≤ 500 µm, bevorzugt von ≤ 200 µm, oder bevorzugt von ≤ 100 µm auf oder bevorzugt in einem Bereich von 10 bis 500 µm, oder bevorzugt in einem Bereich von 50 bis 100 µm.

Ein derartiger Gegenstand zeichnet sich insbesondere durch seine besonders hohe Stabilität aus und dabei ferner durch besonders homogene mechanische Eigenschaften durch den Gegenstand.

Bezüglich der mechanischen Eigenschaften seien insbesondere die Dichte als Maß für eine hohe körperliche Stabilität und die Zugfestigkeit genannt, welche insbesondere die Stabilität des Gegenstands in der Schichtebene darstellt.

Diesbezüglich ist es besonders bevorzugt, dass im Zugversuch angelehnt an DIN EN ISO 527-2:2012 das Produkt eine Zugfestigkeit aufweist, die größer ist, als die Zugfestigkeit des unbehandelten Gegenstands oder in anderen Worten, dass die Schichten des behandelten Gegenstands zueinander nach Verfahrensschritt b) eine Zugfestigkeit aufweisen, die größer ist, als vor Verfahrensschritt b). Dabei ist es besonders bevorzugt, dass im Zugversuch angelehnt an DIN EN ISO 527-2:2012 die Schichten des behandelten Gegenstands zueinander eine Zugfestigkeit aufweisen, die größer ist, als die Zugfestigkeit des unbehandelten Gegenstands um einen Betrag von ≥ 10%, bevorzugt um einen Betrag von ≥ 20%, weiter bevorzugt um einen Betrag von ≥ 30%, weiter bevorzugt um einen Betrag von ≥ 50%, weiter bevorzugt um einen Betrag von ≥ 100%, wobei die vorstehend beschriebenen Werte sich beziehen auf die Zugfestigkeit des unbehandelten Gegenstands beziehungsweise des Gegenstands vor Verfahrensschritt b).

Es kann weiterhin bevorzugt sein, dass die Dichte des behandelten Gegenstands größer ist als die Dichte des unbehandelten Gegenstands, oder in anderen Worten, dass die Dichte nach Verfahrensschritt b) größer ist, als vor Verfahrensschritt b). Dabei kann es besonders bevorzugt sein, dass die Dichte des behandelten Gegenstands größer ist als die Dichte des unbehandelten Gegenstands um einen Betrag von ≥ 2%, bevorzugt um einen Betrag von ≥ 5%, weiter bevorzugt um einen Betrag von ≥ 8%, weiter bevorzugt um einen Betrag von ≥ 10%, bezogen auf die Dichte des unbehandelten Gegenstands beziehungsweise bezogen auf die Dichte des Gegenstands vor Verfahrensschritt b).

Insbesondere diese mechanischen Eigenschaften lassen sich durch das hier beschriebene Verfahren im Vergleich zu herkömmlichen additiv erzeugten Gegenständen verbessern.

Bezüglich weiterer Vorteile und technischer Merkmale des Verfahrens wird auf die nachfolgende Beschreibung des Gegenstands verwiesen, und umgekehrt.

### Beispiele

Im Folgenden werden verschiedene Versuche gezeigt, in denen ein durch ein FDM- oder SLS-Verfahren oder DLP- Verfahren als additives Fertigungsverfahren gemäß Verfahrensschritt a) erzeugter und gemäß Verfahrensschritt b) behandelter Gegenstand auf seine Eigenschaften vor und nach Verfahrensschritt b) untersucht wird.

### Prüfverfahren:

Shore A: In Anlehnung an DIN ISO 7619-1:2012-02, die erforderliche Prüfkörperdicke wurde durch mehrfaches Aufstapeln der erhaltenen Prüfkörper erreicht.
Zugversuch: In Anlehnung an DIN EN ISO 527-2:2012, die Prüfkörper wurden vor der Messung nicht 24 Stunden bei Normklima gelagert.
IR (ATR): Auswertung des Verhältnisses der maximalen Höhe der Isocyanatbande im Wellenzahlbereich von 2170 bis 2380 zur maximalen Höhe der CH Streckschwingung im Wellenzahlbereich von 2600 bis 3200.

### Geräte:

FDM Drucker: Für die Versuche wurde ein Massportal Pharaoh XD 20 FDM/FFF 3D Drucker verwendet. Dieser zeichnet sich durch einen weitestgehend geschlossenen Bauraum und einem Bowden-Extruder aus.
SLS Drucker: Für die Versuche wurde ein Farsoon FS251P 3D Drucker verwendet.
DLP Drucker: Für die Versuche wurde ein Autodesk Ember 3D Drucker verwendet.

### Einsatzstoffe:

Silikonöl (Silikonölbad): Silotherm200 Infrasolv von LABC Labortechnik Zillger KG, farblos
Silikonöl (Wärmeträgeröl) wurde über Laborfachhandel bezogen und eingesetzt wie bezogen.
NaCl: Speisesalz mit Korngröße von 0,1 bis 0,9 mm.
Sand (Filtersand): Quarzsand mit Korngröße von 0,4 bis 0,8 mm.

### Resin A:

- 25 g des Reaktionsprodukts des 1,6-HDI-Trimers mit Hydroxyethylacrylat und der folgenden idealisierten Struktur: 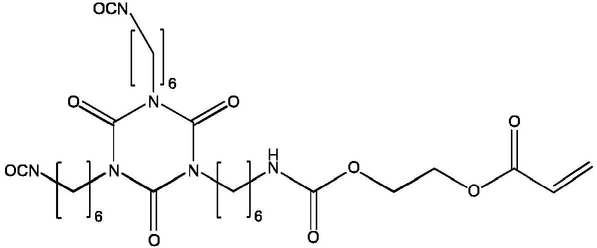
- 50 g des Polyurethanacrylates Ebecryl 4101 (bezogen von der Fa. Allnex SA)
- 25 g Butylacrylat (bezogen von der Fa. Sigma Aldrich)
- 3 g des Photoinitiators *Omnirad 1173* (bezogen von der *Fa.IGM Resins*)
   (alternativ bei Einsatz des Autodesk Ember 3D Druckers wurden 1,5g des Photoinitiators Omnirad BL 750 von IGM Resins und 0,13 g 2,5-Bis(5-*tert*-butyl-benzoxazol-2-yl)thiophene als Radikalfänger an Stelle von Omnirad 1137 verwendet).
- 0,5 g eines Katalysatorkomplexes bestehend aus: 55,6 Gew.-% *Desmodur^{®}* N 3600 (Covestro Deutschland AG) und 44,4 Gew.-% *Jeffcat*^{®} Z 110 (bezogen von der Fa. Huntsman Co).
Diese Einsatzstoffe des Resin A wurden in einem Planetenkreiselmischer *Thinky ARE250* zusammengeführt und bei Raumtemperatur für ca. 2 Minuten bei einer Umdrehungszahl von 2000 Umdrehungen pro Minute vermischt.

Versuch 17: Das radikalisch härtbare Resin A wurde 3 mal mit Rakeln unterschiedlichen Spaltmaßes übereinander auf eine Glasplatte aufgezogen, dadurch wurde ein 3D Druck Verfahren im Sinne eines DLP 3D Druckers simuliert. Die Glasplatte wurde vorab mit einer 1%-igen Lösung von Sojalecithin in Ethylacetat behandelt und getrocknet. Das Sojalecithin wirkte als Trennmittel, um später die gehärteten Filme wieder von Substrat lösen zu können. Die Spaltmaße betrugen 400µm, 300µm und 200µm. Die jeweiligen aufgetragenen Schichten wurden jeweils in einer UV-Härtungsanlage der Firma *Superfici* mit Quecksilber- und Gallium-Strahlungsquellen mit einer Bandgeschwindigkeit von 5 m/min gehärtet. Aus Lampenleistung und Bandgeschwindigkeit resultierte eine Strahlungsintensität von 1.300 mJ/cm², die auf die beschichteten Substrate einwirkte. Dadurch entstand ein Drei-Schichtaufbau von insgesamt ca. 900 µm. Die gehärteten Filme wurden vorsichtig von den Glassubstraten abgezogen, um Prüfkörper für die mechanische und IR-spekroskopische Charakterisierung zu erhalten.

Sämtliche Infrarotspektren wurden an einem mit einer ATR-Einheit ausgerüstetem FT-IR-Spektrometer der Firma Bruker gemessen, wenn nicht anders erwähnt.

Für die relative Messung der Veränderung der freien NCO-Gruppen an Filmen wurde ein FT- IR-Spektrometer (Tensor II) der Fa. Bruker eingesetzt. Die Probe wurde mit der Platinum- ATR-Einheit kontaktiert. Die kontaktierte Fläche der Probe war 2 x 2 mm. Bei der Messung drang die IR-Strahlung je nach Wellenzahl 3- 4 µm in die Probe ein. Von der Probe wurde dann ein Absorptionsspektrum erstellt. Um eine ungleichmäßige Kontaktierung der unterschiedlich harten Proben zu kompensieren, wurde an allen Spektren eine Grundlinienkorrektur durchgeführt und eine Normierung im Wellenzahlbereich 2600-3200 (CH2, CH3). Die Peakhöhe der "freien" NCO-Gruppe wurde im Wellenzahlbereich 2170-2380 bestimmt und das Verhältnis der Signale NCO/ zum höchsten Peak im Bereich 2900-3200 (CH) ermittelt.

Für die Härtemessung nach Shore A gemäß DIN ISO 7619-1:2012-02 wurden einzelne Schichten des Filmes zu einem mindestens 6 mm höhen Prüfkörper zusammengefügt und der Härtewert bestimmt.

Versuch 18: Das radikalisch härtbare Resin A wurde wie in Versuch 17 beschrieben auf eine Glasplatte aufgezogen, UV-gehärtet, vom Glassubstrat abgezogen. Anschließend wurde der freitragende Film senkrecht in ein Salzbett eingebracht, so dass er vollständig von Salz umgeben war. Anschließend wurde er für 1 Stunde bei 185°C im Ofen unter Normalatmosphäre ausgelagert. An diesem nachgehärteten Film wurde IR-spektroskopie und Härtemessung durchgeführt, wie in Versuch 17 beschrieben.

Versuch 19*: Das radikalisch härtbare Resin A wurde wie in Versuch 17 beschrieben auf eine Glasplatte aufgezogen, UV-gehärtet, vom Glassubstrat abgezogen. Anschließend wurde der freitragende Film senkrecht in den Ofen freistehend eingebracht. Anschließend wurde er für 1 Stunde bei 185°C im Ofen unter Normalatmosphäre ausgelagert. Der Film krümmte sich während des Aushärteprozesses zu einem U, welches nach Härtung formbeständig war. An diesem nachgehärteten Film wurde IR-spektroskopie und Härtemessung durchgeführt, wie in Versuch 17 beschrieben.

Erfindungsgemäß verwendete TPU wurden nach zwei gängigen Verfahrensmethoden hergestellt: dem Präpolymerverfahren und dem One-Shot/Statikmischer-Verfahren.

Beim Präpolymerverfahren wird das Polyol oder Polyolgemisch auf 180 bis 210 °C vorgeheizt, mit einem Teil des Isocyanats vorgelegt und bei Temperaturen von 200 bis 240 °C umgesetzt. Die Drehzahl des hierbei eingesetzten Zweischneckenextruders beträgt ca. 270 bis 290 U/min. Durch diese vorgelagerte Teilreaktion erhält man ein lineares, leicht vorverlängertes Präpolymer, das im weiteren Verlauf des Extruders mit Restisocyanat und Kettenverlängerer abreagiert. Dieses Verfahren ist beispielhaft in EP-A 747 409 beschrieben.

Beim One-Shot/Statikmischer Verfahren werden alle Comonomere über einen Statikmischer oder ein anderes geeignetes Mischaggregat bei hohen Temperaturen (über 250 °C) innerhalb kurzer Zeit (unter 20 s) homogenisiert und anschließend über einen Zweischneckenextruder bei Temperaturen von 90 bis 180°C und einer Drehzahl von 260-280 U/min ausreagiert und ausgetragen. Dieses Verfahren ist beispielhaft in der Anmeldung DE 19924089 beschrieben.

### TPU A 1,75 mm Filament

Das TPU (thermoplastisches Polyurethan) wurde aus 1 Mol Polyetherpolyol (DuPont) mit einem zahlenmittleren Molekulargewicht von 1000 g/mol auf Basis von Polytetramethylenetherglykol sowie 5,99 Mol 1,4-Butandiol; 6,99 Mol technischem 4,4'-Diphenylmethandiisocyanat (MDI) mit >98 Gew.-% 4,4'-MDI; 0,25 Gew.-% Irganox^{®} 1010 (Pentaerythritoltetrakis(3-(3,5-di-tert-butyl-4-hydroxyphenyl)propionat) von BASF SE) sowie 0,3 Gew.-% Loxamid 3324 nach dem Präpolymerverfahren hergestellt.

Die Filamente wurden aus dem Granulat nach gängigem Verfahren extrudiert, in einem Wasserbad abgekühlt, in einer Warmluftstrecke getrocknet und über einen Wickler aufgenommen. Vor Einsatz im 3D Drucker wurden die Filamente bei 40°C für 48h getrocknet.

TPU Pulver Blend aus den Rohstoffen TPU 1/TPU 2: Der Pulverblend wurde aus den Pulvern von TPU 1 und TPU 2 durch Einwiegen der jeweiligen Komponenten hergestellt. In einem handelsüblichen TM5 Thermomix wurden beide Materialien auf Stufe 10 für 2*5s vermischt.

### Rohstoff TPU 1

Das TPU (thermoplastisches Polyurethan) 1 wurde aus 1 Mol Polyesterdiol (Covestro) mit einem zahlenmittleren Molekulargewicht von ca. 900 g/mol auf Basis von ca. 56,7 Gew.-% Adipinsäure und ca. 43,3 Gew.-% 1,4-Butandiol sowie ca. 1,41 Mol 1,4-Butan-diol, ca. 0,21 Mol 1,6-Hexandiol, ca. 1,62 Mol technischem 4,4'-Diphenylmethandiisocyanat (MDI) mit >98 Gew.-% 4,4'-MDI, 0,05 Gew.-% Irganox^{®} 1010 (Pentaerythritoltetrakis(3-(3,5-di-tert-butyl-4-hydroxyphenyl)propionat) von BASF SE), 1,1 Gew.-% Licowax^{®} E (Montansäureester von Clariant) und 250 ppm Zinndioctoat, hergestellt.

### Rohstoff TPU 2

Das TPU (thermoplastisches Polyurethan) 2 wurde aus 1 Mol Polyesterdiol (Covestro) mit einem zahlenmittleren Molekulargewicht von ca. 900 g/mol auf Basis von ca. 56,7 Gew.-% Adipinsäure und ca. 43,3 Gew.-% 1,4-Butandiol sowie ca. 2,38 Mol 1,4-Butan-diol, ca. 0,22 Mol 1,6-Hexandiol, ca. 2,6 Mol technischem 4,4'-Diphenylmethandiisocyanat (MDI) mit > 98 Gew.-% 4,4'-MDI, 0,05 Gew.-% Irganox^{®} 1010 (Pentaerythritoltetrakis(3-(3,5-di-tert-butyl-4-hydroxyphenyl)propionat) von BASF SE), 1,1 Gew.-% Licowax^{®} E (Montansäureester von Clariant) und 250 ppm Zinndioctoat, hergestellt.

Den unter Rohstoff TPU 1 und Rohstoff TPU 2 hergestellten TPU wurden 0,2 Gew.-%, bezogen auf TPU, hydrophobierter pyrogener Kieselsäure als Fließmittel (Aerosil^{®} R972 von Evonik) zugegeben und die Mischung mechanisch unter Tiefkälte (kryogener Zerkleinerung) in einer Stiftmühle zu Pulver verarbeitet und anschließend durch eine Siebmaschine klassifiziert. 90 Gew.-% des Mittels hatten einen Teilchendurchmesser von kleiner 140 µm (gemessen mittels Laserbeugung (HELOS - Partikelgrößenanalyse)).

1,75 mm Filament PC1 auf Basis von Makrolon^{®} XT5010, MVR (300 °C/1.2 kg) 34 cm³/10 min: Die Filamente wurden aus dem Granulat nach gängigem Verfahren extrudiert, mit Luft abgekühlt und über einen Wickler aufgenommen.

In Schritt 1 wurden nach den Verfahren FDM Druck (Bedingungen siehe Tabelle 3) aus den Filamenten TPU A und PC1 S2 Zugstäbe Form nach ISO 527-2:2012 hergestellt.

Weiter wurden in Schritt 1 nach dem Verfahren SLS Druck (Bedingungen siehe Tabelle 3) aus den Pulvermischungen von Rohstoff TPU 1 und Rohstoff TPU 2 S2 Zugstäbe nach ISO 527-2:2012 hergestellt.

Weiter wurden in Schritt 1 nach dem Verfahren DLP Druck (Bedingungen siehe Tabelle 3) S2 Zugstäbe Form nach ISO 527-2:2012 hergestellt.

In Schritt 2 wurden die erhaltenen Zugstäbe einer thermischen Nachhärtung unterzogen. Vergleichsversuche sind mit* gekennzeichnet, die Bedingungen der Nachhärtung variieren, siehe Tabelle 4. Das Nachtempern erfolgte in einem Umlufttrockenschrank bei der vorgegebenen Temperatur, wobei die zu prüfenden Prüfkörper in einer 250 ml Aluschale in dem Medium liegend platziert wurden, vom Medium vollständig überdeckt und der Trockenschrank innerhalb 30 min von RT auf die Zieltemperatur aufgeheizt wurde. Nach Erreichen der Zieltemperatur wurde der Prüfkörper für die gewünschte Zeit bei Zieltemperatur getempert. Im Anschluss wurde die Aluschale aus dem Trockenschrank heiß entnommen und auf einer Laborbank auf Raumtemperatur RT abgekühlt. Die Proben wurden nach Erreichen der RT aber spätestens nach 30 min entnommen, getrocknet und von dem Medium z.B. durch Abspülen mit Wasser gereinigt.

Im Anschluss an die thermische Nachhärtung wurden die erhaltenen Zugstäbe weiter auf mechanische und chemische Zusammensetzung untersucht, siehe Tabelle 5. Ergebnisse der Vergleichsversuche sind wiederum mit einem* gekennzeichnet

**Tabelle 3. Material und Verfahrensbedingungen**

| Material / SLS | TPU blend TPU 1/ TPU 2 (50/50) | TPU blend TPU 1/ TPU 2 (70/30) |
|---|---|---|
| Bauraumtemperatur [°C] | 80 | 80 |
| Laserleistung [W] | 48 | 48 |
| Schichtdicke [mm] | 0,12 | 0,12 |
| Anzahl der Belichtungen pro Schicht (fill scan count) | 2 | 2 |
| Überlappung der Laserspuren (Slicer fill scan spacing) [mm] | 0,15 | 0,15 |
| Rollengeschwindigkeit (Rollerspeed) [mm/s] | 180 | 180 |
| Material / FDM | TPU A | PC1 |
| Extrudertemperatur [°C] | 245 | 285 |
| Bauplattentemperatur [°C] | 60 | 100 |
| Extrusionsgeschwindigkeit [mm/s] | 40 | 40 |
| Schichthöhe [mm] | 0,2 | 0,2 |
| Düsengröße [mm] | 0,4 | 0,4 |
| Material / DLP | Resin A | |
| Bauraumtemperatur [°C] | 23 | |
| Schichthöhe [mm] | 0,05 | |
| Belichtung / Schicht [s] | 1,7 | |

Bei dem FDM-Verfahren wurde ohne äußere Schichten (top solid layer / bottom solid layer) gedruckt. Es wurden 2 äußere Bahnen (Perimeter) und ein Infill von 45° verwendet. Alle Proben wurden in Z Richtung gedruckt, also senkrecht auf der Bauplattform stehend.

Die Eigenschaften der erzeugten Gegenstände nach Verfahrensschritt 1 sind in der folgenden Tabelle 5 als Vergleichsversuche näher beschrieben.

**Tabelle 4. Nachsinterbedingungen**

| Versuch (Erstes Material) | Temperatur [°C] | Zeit [min] | Abkühlzeit auf RT [min] | Medium (zweites Material) |
|---|---|---|---|---|
| TPU A | | | | |
| 1* | 23 | - | - | - |
| 2 | 180 | 60 | 30 | Salz |
| 3 | 190 | 60 | 30 | Salz |
| 4 | 200 | 60 | 30 | Salz |
| 5 | 210 | 60 | 30 | Salz |
| PC1 | | | | |
| 6* | 23 | -- | -- | -- |
| 7 | 190 | 60 | 30 | Salz |
| 8 | 180 | 60 | 30 | Salz |

| TPU blend TPU 1/ TPU 2 (50/50) | | | | |
|---|---|---|---|---|
| 9* | 23 | -- | -- | -- |
| 10 | 200 | 60 | 30 | Silikonöl |
| 11 | 200 | 60 | 30 | Salz |
| 12 | 200 | 60 | 30 | Sand |

| TPU blend TPU 1/ TPU 2 (70/50) | | | | |
|---|---|---|---|---|
| 13* | 23 | -- | -- | -- |
| 14 | 200 | 60 | 30 | Silikonöl |
| 15 | 200 | 60 | 30 | Salz |
| 16 | 200 | 60 | 30 | Sand |

| Resin A | | | | |
|---|---|---|---|---|
| 17* | 23 | -- | -- | -- |
| 18 | 185 | 60 | 30 | Salz |

| | | | | |
|---|---|---|---|---|
| * gekennzeichnet bedeutet Vergleichsversuch | | | | |

**Tabelle 5. Eigenschaften nach Behandlung**

| Versuch | Härte Shore A | Zugfestigkeit [N/mm²] | Maximale Bruchdehnung [%] | Verhältnis ISO / CH Bande in IR |
|---|---|---|---|---|
| TPU A | | | | |
| 1* | | 2,8 | 1,4 | |
| 2 | | 8,8 | 8,6 | |
| 3 | | 8,6 | 12,7 | |
| 4 | | 9 | 9,1 | |
| 5 | | 11 | 6,2 | |

| PC1 | | | | |
|---|---|---|---|---|
| 6* | | 25 | 3 | |
| 7 | | 41 | 3,6 | |
| 8 | | 37 | 2,7 | |

| TPU blend TPU 1/ TPU 2 (50/50) | | | | |
|---|---|---|---|---|
| 9* | | 3,75 | 133,0 | |
| 10 | | 6,03 | 209,7 | |
| 11 | | 16,0 | 400,5 | |
| 12 | | 8,57 | 385,0 | |

| TPU blend TPU 1/ TPU 2(70/30) | | | | |
|---|---|---|---|---|
| 13* | | 3,48 | 118,0 | |
| 14 | | 5,56 | 168,9 | |
| 15 | | 17,2 | 386,6 | |
| 16 | | 11,2 | 441,2 | |
| Resin A 17* | 70 | | | 1:1 |
| 18 | 90 | | | 1:10 |
| 19* | 90 | | | 1:10 |

| | | | | |
|---|---|---|---|---|
| * gekennzeichnet bedeutet Vergleichsversuch | | | | |

Der Vergleich der Ergebnisse des erfindungsgemäßen Verfahrens zeigt eine deutlich Verbesserung der mechanischen Eigenschaften nach erfindungsgemäßer Temperaturlagerung im Vergleich zu nicht getemperten Proben. Weiter ist durch die Hitze- Lagerung in Medien mit höherer Dichte als Luft eine deutlich verbesserte Formstabilität der Prüfkörper erreicht worden, da diese weniger wirksam der Schwerkraft ausgesetzt sind. Dies zeigt sich insbesondere, wenn komplexe Bauteile mit ungestützten Geometrien wie deutlich zu erkennen im Vergleichsbeispiel bei Versuch 19 thermisch nachgehärtet werden. Die ungestützten Geometrien wurden während des Härtungsprozesses durch die Schwerkraft verformt und härten in dieser verformten Form aus.

## Patentansprüche

1. Verfahren zur Herstellung eines behandelten Gegenstandes, umfassend die Schritte:
a) Erzeugen eines Gegenstands mittels additiver Fertigung, wobei
der Gegenstand durch ein mehrmaliges schichtweises und entsprechend einem Querschnitt des Gegenstandes räumlich selektives Anordnen wenigstens eines ersten Materials auf einem Substrat erzeugt wird,
**dadurch gekennzeichnet, dass**
das Verfahren den weiteren Verfahrensschritt aufweist:
b) wenigstens teilweises Kontaktieren des noch auf dem Substrat befindlichen oder schon von dem Substrat abgelösten durch additive Fertigung erzeugten Gegenstands mit einem auf ≥ T erwärmten Pulverbett aus einem zweiten Material für eine Zeit ≥ 1 min., um den behandelten Gegenstand zu erhalten,
wobei
- T für eine Temperatur von ≥ 25 °C, bevorzugt von ≥ 50 °C, mehr bevorzugt von ≥ 75 °C, besonders bevorzugt von ≥ 150 °C steht,
wobei
das Kontaktieren des erhaltenen Gegenstands mit dem Pulverbett gemäß Verfahrensschritt b) für einen Zeitraum durchgeführt wird, der in einem Bereich liegt von ≥ 1 Minuten bis ≤ 174 Stunden.

2. Das Verfahren gemäß Anspruch 1, **dadurch gekennzeichnet, dass** das Verfahren mindestens einen weiteren Verfahrensschritt oder eine Kombination von weiteren Verfahrensschritten aufweist, ausgewählt aus:
A) Ablösen des durch additive Fertigung erzeugten Gegenstands von dem Substrat vor Verfahrensschritt b);
B) Zumindest teilweises Entfernen von nicht reagiertem ersten Material von dem additiv gefertigten Gegenstand vor Verfahrensschritt b);
C) Nachhärten des durch additive Fertigung in Verfahrensschritt a) erzeugten Gegenstands mittels actinischer Strahlung;
D) Abkühlen der erwärmten Flüssigkeit oder des erwärmten Pulverbetts auf eine Temperatur in einem Bereich von < 200°C vor einer Entnahme des behandelten Gegenstands nach dem Verfahrensschritt b);
E) zumindest teilweises mechanisches Entfernen des zweiten Materials von dem Gegenstand während oder nach dem Verfahrensschritt b); und
F) Abwaschen des zweiten Materials nach Verfahrensschritt b) nach Entnahme des Gegenstands aus der Flüssigkeit oder dem Pulver mit einem Lösungsmittel, wobei das Lösungsmittel kein Lösungsmittel oder Reaktionspartner für das erste Material bei einer Temperatur in einem Bereich von T ≤ 200°C für einen Zeitraum ≤ 30min darstellt.

3. Das Verfahren gemäß einem der Ansprüche 1 oder 2, **dadurch gekennzeichnet, dass** das additive Verfahren ausgewählt wird aus der Gruppe bestehend aus High Speed Sintern, selektivem Laserschmelzen, selektivem Lasersintern, Selective Heat Sintering, Binder Jetting, Elektronenstrahlschmelzen, Fused Deposition Modeling, Fused Filament Fabrication, Auftragschweißen, Rührreibschweißen, Wax Deposition Modeling, Contour Crafting, MetallPulver-Auftragsverfahren, Kaltgasspritzen, Elektronenstrahlschmelzen, Stereolithographie, 3D-Siebdruckverfahren, lichtgesteuerte elektrophoretische Abscheidung, Druck von mit Metallpulver hochgefüllten Thermoplasten nach dem FDM Verfahren, Nano Metallpulver im Inkjetverfahren, DLP (Direct Light Processing), Inkjetting, Continuous Light Interface Processing (CLIP).

4. Das Verfahren gemäß einem der Ansprüche 1 bis 3, **dadurch gekennzeichnet, dass** das schmelzbare Polymer ausgewählt ist aus Polyetheretherketon (PEEK), Polyaryletherketon (PAEK), Polyetherketoneketon (PEKK), Polyethersulfone, Polyimid, Polyetherimid, Polyester, Polyamide, Polycarbonate, Polyurethane, Polyvinylchlorid, Polyoxymethylen, Polyvinylacetat, Polyacrylate, Polymethacrylate, TPE (Thermoplastische Elastomere), Thermoplaste wie Polyethylen, Polypropylen, Polylactid, ABS (Acrylnitril-Butadien-Styrol-Copolymere), PETG (ein mit Glycol modifiziertes Polyethylenterephtalat), oder auch Polystyrol, Polyethylen, Polypropylen und Abmischungen und / oder Legierungen der genannten Polymere.

5. Das Verfahren gemäß einem der Ansprüche 1 bis 4, **dadurch gekennzeichnet, dass** während des Kontaktierens des Gegenstands mit dem Pulverbett gemäß Verfahrensschritt b) das Pulverbett wenigstens zeitweise unter Überdruck gesetzt wird, insbesondere mit einem Druck in einem Bereich von ≥ 1 bar bis ≤ 1000 bar,

6. Das Verfahren gemäß einem der Ansprüche 1 bis 4, **dadurch gekennzeichnet, dass** während des Kontaktierens des Gegenstands mit dem Pulverbett gemäß Verfahrensschritt b) das Pulverbett wenigstens zeitweise unter Unterdruck gesetzt wird mit einem Druck in einem Bereich von ≥ 0,01 bar bis ≤ 1 bar,

7. Das Verfahren gemäß einem der Ansprüche 1 bis 6, **dadurch gekennzeichnet, dass** während des Kontaktierens des Gegenstands mit dem Pulverbett gemäß Verfahrensschritt b), das zweite Material in Form des Pulverbetts wenigstens zeitweise mit einem Inertgas geflutet wird.

8. Das Verfahren gemäß einem der Ansprüche 1 bis 7, **dadurch gekennzeichnet, dass** das zweite Material wasserlöslich ist.

9. Das Verfahren gemäß einem der Ansprüche 1 bis 8, **dadurch gekennzeichnet, dass** das zweite Material löslich ist in einer Säure, einer Base oder einem organischen Lösungsmittel.

10. Das Verfahren gemäß einem der Ansprüche 1 bis 9, **dadurch gekennzeichnet, dass** das zweite Material ausgewählt ist aus wenigstens einem der Gruppe bestehend aus Siliziumdioxid, Polytetrafluoroethylen, Aluminiumoxid, Metallen, Metallsalzen, Zuckern, Organischen Salzen, Polyethylen-Wachs, Polyester, Polyacrylsäure, Polyethylenoxid, Polyoxymethylen Polycarbonat und einer Mischung aufweisend wenigstens eine der vorgenannten Substanzen zur Ausbildung eines Pulverbetts.

11. Das Verfahren gemäß einem der Ansprüche 1 bis 9, **dadurch gekennzeichnet, dass** das zweite Material ausgewählt ist aus Metallsalzen zur Ausbildung eines Pulverbetts.

12. Das Verfahren gemäß einem der Ansprüche 1 bis 11, **dadurch gekennzeichnet, dass** die bei Verfahrensschritt b) eingestellte Temperatur T, ausgedrückt in Grad Celsius, im Mittel ≤ 95% der Zersetzungstemperatur des ersten Materials liegt.

13. Das Verfahren gemäß einem der Ansprüche 1 bis 12, **dadurch gekennzeichnet, dass** die bei Verfahrensschritt b) eingestellte Temperatur T in einem Bereich von ≥ 40 °C bis ≤ 2000 °C liegt.

14. Das Verfahren gemäß einem der Ansprüche 1 bis 13, **dadurch gekennzeichnet, dass** die bei Verfahrensschritt b) eingestellte Temperatur T größer ist, als eine Temperatur, die 50°C unterhalb der Vicat-Erweichungstemperatur des ersten Materials liegt, und dass die bei Verfahrensschritt b) eingestellte Temperatut T kleiner ist, als eine Temperatur, die 150°C oberhalb der Vicat-Erweichungstemperatur des ersten Materials ist, wobei die Vicat-Erweichungstemperatur ermittelbar ist nach DIN EN ISO 306:2014-03.

15. Das Verfahren gemäß einem der Ansprüche 1 bis 14, **dadurch gekennzeichnet, dass** sich die Temperatur T des Pulverbetts bevorzugt im Laufe des Verfahrensschritts b) verändert und die Temperaturkurve gegebenenfalls Temperaturen von -190°C bis +2000°C umfasst, insbesondere wobei das Kontaktieren des erhaltenen Gegenstands mit dem Pulverbett gemäß Verfahrensschritt b) für einen Zeitraum von ≥ 1 Minuten bis ≤ 72 Stunden durchgeführt wird.

## Claims

1. A process for producing a treated article, comprising the steps of:
a) producing an article by additive manufacturing, wherein
the article is produced by a repeated layerwise arranging, which is spatially selective according to a cross section of the article, of at least one first material on a substrate,
**characterized in that**
the process comprises the further process step of:
b) at least partially contacting the article produced by additive manufacturing which is still present on the substrate or already detached from the substrate with a powder bed of a second material heated to ≥ T for a time ≥ 1 min to obtain the treated article,
wherein
- T is a temperature of ≥ 25°C, preferably of ≥ 50°C, more preferably of ≥ 75°C, particularly preferably of ≥ 150°C,
wherein
the contacting of the obtained article with the powder bed according to process step b) is performed for a period which is in a range from ≥ 1 minute to ≤ 174 hours.

2. The process as claimed in claim 1, **characterized in that** the process comprises at least one further process step or a combination of further process steps selected from:
A) detaching the article produced by additive manufacturing from the substrate before process step b);
B) at least partially removing unreacted first material from the additively manufactured article before process step b);
C) post-curing the article produced by additive manufacturing in process step a) using actinic radiation;
D) cooling the heated liquid or the heated powder bed to a temperature in a range of < 200°C before removal of the treated article after process step b);
E) at least partially mechanically removing the second material from the article during or after process step b); and
F) washing off the second material after process step b) after removal of the article from the liquid or the powder with a solvent, wherein the solvent is not a solvent or reactant for the first material at a temperature in a range of T ≤ 200°C for a period ≤ 30 min.

3. The process as claimed in either of claims 1 and 2, **characterized in that** the additive process is selected from the group consisting of high-speed sintering, selective laser melting, selective laser sintering, selective heat sintering, binder jetting, electron beam melting, fused deposition modeling, fused filament fabrication, build up welding, friction stir welding, wax deposition modeling, contour crafting, metal powder application methods, cold gas spraying, electron beam melting, stereolithography, 3D screen printing methods, light-controlled electrophoretic deposition, printing of thermoplastics highly filled with metal powder by the FDM process, nano metal powder in an inkjet method, DLP (direct light processing), inkjetting, continuous light interface processing (CLIP).

4. The process as claimed in any of claims 1 to 3, **characterized in that** the meltable polymer is selected from polyether ether ketone (PEEK), polyaryl ether ketone (PAEK), polyether ketone ketone (PEKK), polyethersulfones, polyimide, polyetherimide, polyesters, polyamides, polycarbonates, polyurethanes, polyvinyl chloride, polyoxymethylene, polyvinyl acetate, polyacrylates, polymethacrylates, TPE (thermoplastic elastomers), thermoplastics such as polyethylene, polypropylene, polylactide, ABS (acrylonitrile-butadiene-styrene copolymers), PETG (a glycol-modified polyethylene terephthalate) or else polystyrene, polyethylene, polypropylene and blends and/or alloys of the recited polymers.

5. The process as claimed in any of claims 1 to 4, **characterized in that** during contacting of the article with the powder bed according to process step b) the powder bed is at least for a time subjected to superatmospheric pressure, especially to a pressure in a range from ≥ 1 bar to ≤ 1000 bar.

6. The process as claimed in any of claims 1 to 4, **characterized in that** during contacting of the article with the powder bed according to process step b) the powder bed is at least for a time subjected to subatmospheric pressure at a pressure in a range from ≥ 0.01 bar to ≤ 1 bar.

7. The process as claimed in any of claims 1 to 6, **characterized in that** during the contacting of the article with the powder bed according to process step b) the second material in the form of the powder bed is at least for a time blanketed with an inert gas.

8. The process as claimed in any of claims 1 to 7, **characterized in that** the second material is water-soluble.

9. The process as claimed in any of claims 1 to 8, **characterized in that** the second material is soluble in an acid, a base or an organic solvent.

10. The process as claimed in any of claims 1 to 9, **characterized in that** the second material is selected from at least one of the group consisting of silicon dioxide, polytetrafluoroethylene, aluminum oxide, metals, metal salts, sugars, organic salts, polyethylene wax, polyester, polyacrylic acid, polyethylene oxide, polyoxymethylene polycarbonate and a mixture comprising at least one of the aforementioned substances for forming a powder bed.

11. The process as claimed in any of claims 1 to 9, **characterized in that** the second material is selected from metal salts for forming a powder bed.

12. The process as claimed in any of claims 1 to 11, **characterized in that** the temperature T established in process step b), expressed in degrees Celsius, is on average ≤ 95% of the decomposition temperature of the first material.

13. The process as claimed in any of claims 1 to 12, **characterized in that** the temperature T established in process step b) is in a range from ≥ 40°C to ≤ 2000°C.

14. The process as claimed in any of claims 1 to 13, **characterized in that** the temperature T established in process step b) is higher than a temperature that is 50°C below the Vicat softening temperature of the first material and wherein the temperature T established in process step b) is lower than a temperature that is 150°C above the Vicat softening temperature of the first material, wherein the Vicat softening temperature is determinable according to DIN EN ISO 306:2014-03.

15. The process as claimed in any of claims 1 to 14, **characterized in that** the temperature T of the powder bed preferably changes over the course of process step b) and the temperature curve optionally comprises temperatures of -190°C to +2000°C, especially wherein the contacting of the obtained article with the powder bed according to process step b) is performed for a period of ≥ 1 minute to ≤ 72 hours.

## Revendications

1. Procédé de fabrication d'un objet traité, comprenant les étapes suivantes :
a) la production d'un objet par fabrication additive, où
l'objet est produit par un agencement répété, couche par couche et de manière sélective dans l'espace, d'au moins un premier matériau sur un substrat, conformément à une section transversale de l'objet,
**caractérisé en ce que**
le procédé présente l'étape de procédé supplémentaire :
b) la mise en contact au moins partielle de l'objet fabriqué par fabrication additive, se trouvant encore sur le substrat ou déjà détaché du substrat, avec un lit de poudre chauffé à ≥ T composé d'un deuxième matériau pendant une durée ≥ 1 min afin d'obtenir l'objet traité,
où
- T représente une température ≥ 25 °C, de préférence ≥ 50 °C, plus préférablement ≥ 75 °C, particulièrement préférablement ≥ 150 °C,
où
la mise en contact de l'objet obtenu avec le lit de poudre selon à l'étape de procédé b) est effectuée pendant une période dans une plage de ≥ 1 minute à ≤ 174 heures.

2. Procédé selon la revendication 1, **caractérisé en ce que** le procédé comporte au moins une étape de procédé supplémentaire ou une combinaison d'étapes de procédé supplémentaires choisies parmi :
A) le détachement de l'objet produit par fabrication additive du substrat avant l'étape de procédé b) ;
B) le retrait au moins partiel du premier matériau n'ayant pas réagi de l'objet fabriqué par addition avant l'étape de procédé b) ;
C) le post-durcissement de l'objet produit par fabrication additive à l'étape de procédé a) au moyen d'un rayonnement actinique ;
D) le refroidissement du liquide chauffé ou du lit de poudre chauffé à une température dans une plage de < 200 °C avant un détachement de l'objet traité après l'étape de procédé b) ;
E) le retrait mécanique au moins partiellement du deuxième matériau de l'objet pendant ou après l'étape de procédé b) ; et
F) le lavage du deuxième matériau après l'étape de procédé b) après le détachement de l'objet pour éliminer le liquide ou la poudre avec un solvant, où le solvant n'est pas un solvant ou un partenaire de réaction pour le premier matériau à une température dans une plage de T ≤ 200 °C pendant une période ≤ 30 min.

3. Procédé selon l'une des revendications 1 ou 2, **caractérisé en ce que** le procédé additif est choisi dans le groupe constitué par le frittage à grande vitesse, la fusion sélective au laser, le frittage sélectif au laser, le frittage sélectif à chaud, le jet de liant, la fusion par faisceau d'électrons, la modélisation par dépôt par fusion, la fabrication de filaments fondus, le soudage par accumulation, le soudage par friction-malaxage, la modélisation de dépôt de cire, le moulage de contour, les procédés d'application de poudre métallique, la pulvérisation de gaz froid, la fusion par faisceau d'électrons, la stéréolithographie, les procédés de sérigraphie 3D, le dépôt électrophorétique contrôlé par la lumière, l'impression de thermoplastiques fortement chargés de poudre métallique par le procédé FDM, les nanopoudres métalliques par le procédé au jet d'encre, DLP (traitement direct de la lumière), le jet d'encre, le traitement continu d'interface de lumière (CLIP).

4. Procédé selon l'une des revendications 1 à 3, **caractérisé en ce que** le polymère fusible est choisi parmi la polyétheréthercétone (PEEK), la polyaryléthercétone (PAEK), la polyéthercétonecétone (PEKK), les polyéthersulfones, le polyimide, le polyétherimide, les polyesters, les polyamides, les polycarbonates, les polyuréthanes, le poly(chlorure de vinyle), le polyoxyméthylène, le poly(acétate de vinyle), les polyacrylates, les polyméthacrylates, les TPE (élastomères thermoplastiques), les thermoplastiques tels que le polyéthylène, le polypropylène, le polylactide, l'ABS (copolymères acrylonitrile-butadiène-styrène), le PETG (un poly(éthylène téréphtalate) modifié par un glycol), ou encore le polystyrène, le polyéthylène, le polypropylène, ainsi que des mélanges et/ou alliages des polymères mentionnés.

5. Procédé selon l'une des revendications 1 à 4, où, pendant la mise en contact de l'objet avec le lit de poudre selon l'étape de procédé b), le lit de poudre est placé au moins temporairement sous une surpression, en particulier à une pression dans une plage allant de ≥ 1 bar à ≤ 1000 bar,

6. Procédé selon l'une des revendications 1 à 4, où, pendant la mise en contact de l'objet avec le lit de poudre dans l'étape de procédé b), le lit de poudre est placé au moins temporairement sous pression réduite avec une pression dans une plage allant de ≥ 0,01 bar à ≤ 1 bar,

7. Procédé selon l'une des revendications 1 à 6, où, pendant la mise en contact de l'objet avec le lit de poudre dans l'étape de procédé b), le deuxième matériau sous la forme du lit de poudre est au moins temporairement inondé d'un gaz inerte.

8. Procédé selon l'une des revendications 1 à 7, où le deuxième matériau est soluble dans l'eau.

9. Procédé selon l'une des revendications 1 à 8, où le deuxième matériau est soluble dans un acide, une base ou un solvant organique.

10. Procédé selon l'une des revendications 1 à 9, où le deuxième matériau est choisi parmi au moins l'un du groupe constitué par le dioxyde de silicium, le polytétrafluoroéthylène, l'oxyde d'aluminium, les métaux, les sels métalliques, les sucres, les sels organiques, la cire de polyéthylène, le polyester, l'acide polyacrylique, l'oxyde de polyéthylène, le polycarbonate de polyoxyméthylène et un mélange comprenant au moins une des substances précitées pour former un lit de poudre.

11. Procédé selon l'une des revendications 1 à 9, **caractérisé en ce que** le deuxième matériau est choisi parmi des sels métalliques destinés à former un lit de poudre.

12. Procédé selon l'une des revendications 1 à 11, **caractérisé en ce que** la température T réglée dans l'étape de procédé b), exprimée en degrés Celsius, est en moyenne ≤ 95 % de la température de décomposition du premier matériau.

13. Procédé selon l'une des revendications 1 à 12, où la température T réglée dans l'étape de procédé b) est dans une plage de ≥ 40 °C à ≤ 2000 °C.

14. Procédé selon l'une des revendications 1 à 13, **caractérisé en ce que** la température T réglée à l'étape de procédé b) est supérieure à une température inférieure de 50 °C à la température de ramollissement de Vicat du premier matériau et **en ce que** la température T réglée à l'étape de procédé b) est inférieure à une température qui est supérieure de 150 °C à la température de ramollissement de Vicat du premier matériau, la température de ramollissement de Vicat pouvant être déterminée selon la norme DIN EN ISO 306:2014-03.

15. Procédé selon l'une des revendications 1 à 14, **caractérisé en ce que** la température T du lit de poudre varie de préférence au cours de l'étape de procédé b) et **en ce que** la courbe de température comprend éventuellement des températures de -190 °C à +2000 °C, en particulier où la mise en contact de l'objet obtenu avec le lit de poudre dans l'étape de procédé b) est effectuée pendant une période de ≥ 1 minute à ≤ 72 heures.
